(19) Europäisches Patentamt
European Patent Office
Office européen des brevets

(11) EP 2 524 954 A1

(12) # EUROPEAN PATENT APPLICATION
published in accordance with Art. 153(4) EPC

(43) Date of publication:
**21.11.2012 Bulletin 2012/47**

(21) Application number: **11733012.6**

(22) Date of filing: **12.01.2011**

(51) Int Cl.:
***C09J 183/06*** *(2006.01)* ***C09J 4/00*** *(2006.01)*
***C09J 7/02*** *(2006.01)* ***C09J 11/00*** *(2006.01)*
***C09J 183/05*** *(2006.01)* ***C09J 183/07*** *(2006.01)*

(86) International application number:
**PCT/JP2011/051023**

(87) International publication number:
**WO 2011/087146 (21.07.2011 Gazette 2011/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2010 JP 2010005368**

(71) Applicant: **Dow Corning Toray Co., Ltd.**
**Tokyo 100-0004 (JP)**

(72) Inventor: **KUO, Chung Mien**
**Taipei 11493 (TW)**

(74) Representative: **Thomson, Craig Richard**
**Murgitroyd & Company**
**Scotland House**
**165-169 Scotland Street**
**Glasgow G5 8PL (GB)**

(54) **RE-ADHERABLE SILICONE-BASED ADHESIVE COMPOSITION, SHEET-SHAPED BASE MATERIAL HAVING RE-ADHERABLE ADHESIVE LAYER OBTAINED BY CURING SAID COMPOSITION, AND USE OF SAID BASE MATERIAL AS PROTECTIVE FILM OR AFFIXING SHEET**

(57) Problem: To provide a silicone-based releasable adhesive composition that is capable of easily controlling peeling force of a releasable adhesive layer by the composition, and whereby the silicone-based releasable adhesive composition has excellent attachment characteristics and releasability characteristics. A further object is to provide a sheet-form substrate and a releasable adhesive sheet that have a releasable adhesive layer formed by curing this composition.

Resolution Means: The silicone-based releasable adhesive composition includes an organopolysiloxane resin-organopolysiloxane condensation reaction product obtained by condensation reaction between (a1) 100 weight parts of an MQ type organopolysiloxane resin containing hydroxyl groups or alkoxy groups in a range of 0.3 to 2.0 weight% and having an M unit to Q unit molar ratio of 0.6 to 1.0, and (a2) 20 to 150 weight parts of a chain-like diorganopolysiloxane having an average degree of polymerization of 100 to 1,000 and having at least one hydroxyl group or alkoxy group, wherein the organopolysiloxane resin-organopolysiloxane condensation reaction product preferably includes a certain hydroxyl group content.

EP 2 524 954 A1

## Description

### Technical Field

The present invention relates to a silicone-based releasable adhesive composition and a sheet-form substrate and releasable adhesive sheet having a releasable adhesive layer formed by curing this composition. Furthermore, by use of the releasable adhesive sheet of the present invention, a printable or writable surface is provided on one side of a protective film or fixing sheet attached to a display of an electronic device or the like, and a fixing sheet is provided that can be suitably used for exterior store window displays, interior store window displays subjected to direct sunlight, or the like, even at high temperatures.

### Background Art

Silicone compositions are widely used for the manufacture of protective films for displays of electronic devices and automotive parts, adhesive tapes, various types of labels, and fixing sheets used for ornamentation and window displays by forming an adhesive layer or pressure-sensitive adhesive layer by curing a silicone composition on the surface of a substrate such as various types of paper, synthetic films, fibers, or the like. Furthermore, an adhesive layer formed by curing a silicone composition has been proposed that has good releasability.

For example, in Patent Document 1, an adhesive film is proposed that is provided with an adhesive layer prepared from a silicone composition that includes: (A) a diorganopolysiloxane having at least 2 alkenyl groups in each molecule, (B) a polyorganosiloxane (i.e. MQ resin) containing $R^1{}_3SiO_{0.5}$ units (M units) and $SiO_2$ units (Q units) at a $R^1{}_3SiO_{0.5}$ unit / $SiO_2$ unit molar ratio of 0.6 to 1.7, and (C) a polyorganosiloxane including the SiH group. Moreover, it has been also reported that this adhesive film has excellent adhesivity and releasability and is particularly suitable for attaching to a flat panel display. Moreover, in paragraph 0036 of Patent Document 1, although it has been proposed that the aforementioned component (A) and component (B) be used as reactants in the presence of a base catalyst, there is no disclosure of any details of such use. On the other hand, a peeling force of this adhesive film is weak and cannot be controlled over a wide range. Thus this adhesive film has been inconvenient in that use is not possible for protective film applications requiring a somewhat strong peeling force (e.g. display of a cellular phone or the like) and for fixing sheets used for displays such as outdoor advertisements, signs, or the like.

In Patent Document 2 or Patent Document 3, a fixing sheet for ornamentation is proposed that includes, on a first surface, an adhesive layer formed by curing a silicone formed from a straight-chain polyorganosiloxane having vinyl groups, and on a second surface, an image-receiving layer. Furthermore, this fixing sheet is proposed as a fixing sheet used for display, i.e. labels, stickers, outdoor advertising or signage, or the like, and it is proposed that reattachment is readily possible, so that during peeling off of the fixing sheet, the fixing sheet may be removed easily using a slight peeling force, and there is no generation of remnant adhesive. However, bubbles are sometimes entrapped during attachment of such fixing sheets, and adhesivity, releasability, or the like of such fixing sheets is still unsatisfactory.

In the field of silicone-based pressure sensitive adhesives formed on a substrate as a silicone adhesive layer formed by addition curing reaction, technology is already known that uses a polydimethylsiloxane condensation product that includes a hydroxyl group and a polyorganosiloxane resin component including the hydroxyl group for improvement of adhesivity (Patent Document 4, Patent Document 5, or the like). However, due to improvement of peeling force, although such silicone-based pressure sensitive adhesives are useful for fixing purposes, the silicone-based pressure sensitive adhesives are normally difficult to use in applications that require releasability such as the use described above of reattaching by hand.

Moreover, Patent Document 6 proposes a silicone-based pressure sensitive adhesive composition, an adhesive tape using such composition, and especially a masking tape for thermal treatment, where the silicone-based pressure sensitive adhesive composition includes: an MQ resin and a condensation reaction product formed by reaction of (a) 10 weight parts of highly polymerized diorganopolysiloxane having a degree of polymerization exceeding 2,000 and having a silanol group and an alkenyl group, and (b) 1 to 30 weight parts of an organopolysiloxane resin having at least one hydrolysis-capable group per molecule, in the presence of (c) a catalyst. Even when the pressure-sensitive adhesive layer formed by curing of this composition is heat treated at a high temperature that is greater than or equal to 250°C, this composition has the advantage of forming a pressure-sensitive adhesive layer that has very little transferability (i.e. no silicone component is found visually on the attachment target after peeling off). However, sometimes air bubbles are entrapped during attachment, or the diorganopolysiloxane condensation product has a high degree of polymerization. Therefore, there has been a problem in that it has been difficult to control the peeling force. Moreover, the protective film and fixing sheet provided with this pressure-sensitive adhesive layer have been unable to satisfy performance such as adhesivity, releasability, or the like.

Patent Document 1: Japanese Unexamined Patent Application Publication No. 2006-152266A

Patent Document 2: Japanese Unexamined Patent Application Publication No. 2004-59800A (Patent No. 4292270B)

Patent Document 3: Japanese Unexamined Patent Application Publication No. 2007-254565A

Patent Document 4: Japanese Unexamined Patent Application Publication No. H-02-269157A

Patent Document 5: Japanese Unexamined Patent Application Publication No. H-10-110156A

Patent Document 6: Japanese Unexamined Patent Application Publication No. 2008-156497A

Disclosure of the Invention

SUMMARY OF THE INVENTION

The present invention was developed in order to solve the aforementioned problems. An object of the present invention is to provide a silicone-based releasable adhesive composition that has excellent releasability characteristics in that a peeling force of the releasable adhesive layer can be easily controlled by the composition, the adhesive composition does not entrap air bubbles, and, even if air bubbles become entrapped during attachment, readily disperses air bubbles, the adhesive composition can be attached to a surface in a short time interval, the adhesive composition has excellent attachment characteristics of being fixed firmly at a certain position after attachment, and moreover, such that manually peeling off the adhesive composition is easy, and remnant adhesive and increased peeling force do not occur even when the composition is used for a long time interval at high temperature. Moreover, an object of the present invention is to provide a sheet-form substrate and a releasable adhesive sheet that have a releasable adhesive layer formed by curing this silicone-based releasable adhesive composition.

Furthermore, the present invention includes a sheet-form substrate that has the aforementioned releasable adhesive layer. The present invention provides a protective film that attaches to a display of an electronic device or the like, and provides a fixing sheet that can be suitably used for window display or the like, provided with a printable or writable surface on a face of the fixing sheet. The protective film or fixing sheet has the aforementioned excellent attachment characteristics and releasability characteristics.

Means To Resolve the Problems

As a result of intensive investigation aimed at achieving the above objects, the present inventors arrived at the present invention. Specifically, a silicone-based releasable adhesive composition including an organopolysiloxane resin-organopolysiloxane condensation reaction product obtained by condensation reaction of a certain number of parts of (a1) an organopolysiloxane resin essentially including M units and Q units, and (a2) a straight-chain or branched-chain diorganopolysiloxane having an average degree of polymerization of 10 to 1,000 and having a hydroxyl group or alkoxy group within the molecule was discovered, such that the peeling force of a releasable adhesive layer can be easily controlled by the composition, and that the silicone-based releasable adhesive composition is superior regarding the aforementioned attachment characteristics and releasability characteristics.

Furthermore, the inventors of the present invention discovered that, when the hydroxyl group content in this condensation reaction product was in the range of 0.05 to 0.80 weight%, and more preferably in the range of 0.10 to 0.60 weight%, particularly excellent performance could be realized, thereby attaining the present invention. Moreover, the inventors of the present invention discovered that, by adjusting the reaction ratio of the component (a1) to the component (a2), or by treating the condensation reaction product using a silylating agent such as a silazane compound or the like, it was possible to easily control the content of the aforementioned hydroxyl group, and it was possible to adjust the peeling force of the releasable adhesive layer, thereby attaining the present invention. Moreover, the inventors of the present invention arrived at the present invention by discovering that a silicone-based releasable adhesive composition using a straight-chain or branched-chain olefin was useful for the improvement of viscosity, peeling force, attachment characteristics, and releasability characteristics of the silicone-based releasable adhesive composition.

That is to say, the present invention is:

[1] A silicone-based releasable adhesive composition including an organopolysiloxane resin-organopolysiloxane condensation reaction product (A) obtained by a condensation reaction of

(a1) 100 weight parts of organopolysiloxane resin essentially including an $R^1_3SiO_{1/2}$ unit (each $R^1$ in the formula

is independently a hydroxyl group, $C_{1-6}$ alkoxy group, or $C_{1-10}$ substituted or unsubstituted monovalent hydrocarbyl group) and an $SiO_{4/2}$ unit, wherein a molar ratio of the $R^1{}_3SiO_{1/2}$ unit to the $SiO_{4/2}$ unit is 0.6 to 1.0 and a content of the hydroxyl group or alkoxy group is 0.3 to 2.0 weight% with

(a2) 20 to 150 weight parts of straight-chain or branched-chain diorganopolysiloxane that has an average degree of polymerization of 100 to 1000 and that has at least one hydroxyl group or $C_{1-6}$ alkoxy group in each molecule in the presence of

(a3) a condensation reaction catalyst.

[2] The silicone-based releasable adhesive composition according to [1] including:

(A) 100 weight parts of said organopolysiloxane resin-organopolysiloxane condensation reaction product,

(B) 10 to 900 weight parts of organopolysiloxane that contains at least two silicon-bonded alkenyl groups in each molecule,

(C) organohydrogenpolysiloxane that has at least two silicon-bonded hydrogen atoms in each molecule, in an amount that provides a value of 0.3 to 5.0 for the molar ratio between the [silicon-bonded hydrogen in component (C)] and the [alkenyl group in component (B)], and

(D) a catalytic quantity of a platinum hydrosilylation reaction catalyst.

[3] The silicone-based releasable adhesive composition according to [1] or [2], wherein the hydroxyl group content of the organopolysiloxane resin-organopolysiloxane condensation reaction product (A) is 0.05 to 0.80 weight%.

[4] The silicone-based releasable adhesive composition according to any one of [1] to [3], wherein the organopolysiloxane resin-organopolysiloxane condensation reaction product (A) is obtained by the condensation reaction of 100 weight parts of component (a1) and 30 to 100 weight parts of component (a2) in the presence of component (a3), and has a hydroxyl group content of 0.10 to 0.60 weight%.

[5] The silicone-based releasable adhesive composition according to any one of [1] to [3], wherein the organopolysiloxane resin-organopolysiloxane condensation reaction product (A) is obtained by condensation reacting 100 weight parts of component (a1) with 20 to 150 weight parts of component (a2) in the presence of component (a3), and thereafter reacting with 0.1 to 10.0 weight parts of (a4) at least one type of silylating agent.

[6] The silicone-based releasable adhesive composition according to any one of [1] to [5], further including 0.1 to 50 weight parts of at least one type of olefin represented by the following structural formula (1) or (2) to 100 weight parts of the organopolysiloxane resin-organopolysiloxane condensation reaction product (A).

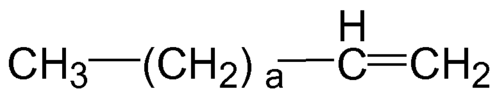

(1)

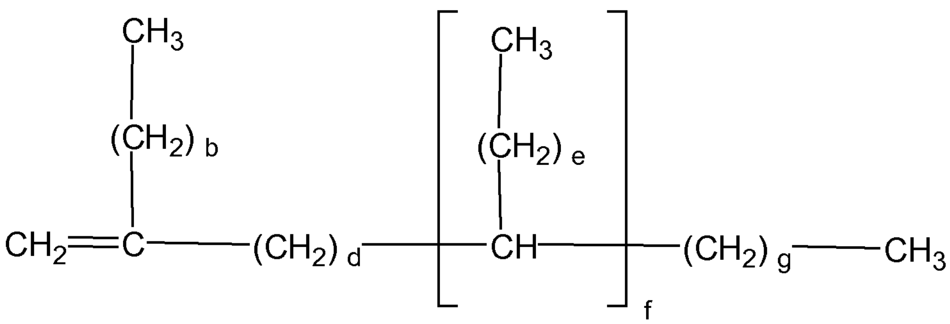

(2)

In this formula, a is a number from 1 to 27; d and f are each independently a number from 0 to 20; b and e are each independently a number from 1 to 12; and g is a number from 3 to 14.

[7] A sheet-form substrate having a releasable adhesive layer obtained by curing the silicone-based releasable adhesive composition according to any one of [1] to [6].

[8] The sheet-form substrate according to [7], wherein a thickness of the releasable adhesive layer is in the range of 0.1 to 100 μm.

[9] The sheet-form substrate according to [7] or [8], wherein the releasable adhesive layer has a peeling force in the range of 1 to 20 g/inch, measured according to a 180-degree peel test.

[10] The sheet-form substrate according to [7] or [8], wherein the releasable adhesive layer has a peeling force in the range of 1 to 200 g/inch, measured according to a 180-degree peel test.

[11] The sheet-form substrate according to any one of [7] to [9], wherein the releasable adhesive layer has a thickness of 5 to 100 μm and is obtained by curing the silicone-based releasable adhesive composition including:

(A) 100 weight parts of said organopolysiloxane resin-organopolysiloxane condensation reaction product,

(B) 150 to 900 weight parts of said organopolysiloxane that contains at least two silicon-bonded alkenyl groups in each molecule.

[12] The sheet-form substrate according to [7], [8], or [10], wherein the releasable adhesive layer has a thickness of 2 to 60 μm and is obtained by curing the silicone-based releasable adhesive composition including:

(A) 100 weight parts of said organopolysiloxane resin-organopolysiloxane condensation reaction product,

(B) 10 to 150 weight parts of said organopolysiloxane that contains at least two silicon-bonded alkenyl groups in each molecule.

[13] The sheet-form substrate according to any one of [7] to [12], further including at least one printable or writable surface on the sheet-form substrate.

[14] The sheet-form substrate according to any one of [7] to [13], wherein the sheet-form substrate is substantially transparent.

[15] A protective film for displays including the sheet-form substrate according to any one of [7] to [14].

[16] A protective film for displays including the sheet-form substrate according to [11], wherein the sheet-form substrate is substantially transparent.

[17] A releasable fixing sheet including the sheet-form substrate according to any one of [7] to [14].

[18] A releasable fixing sheet for window displays including the sheet-form substrate according to [12], wherein the sheet-form substrate has at least one printable or writable surface on the substrate.

<u>Effects of the Invention</u>

According to the present invention, a peeling force of the releasable adhesive layer can be easily controlled by the composition, it is possible to perform attachment over a short time interval without entrapping air bubbles during attachment (or to readily remove air bubbles entrapped during attachment), attachment characteristics are excellent due to the ability to fix strongly at a certain position after the attachment, and it is possible to provide a silicone-based releasable adhesive composition having excellent releasability characteristics such that removal by hand is easy, and the peeling force does not increase and remnant adhesive is not generated even after use for a long time interval at high temperature. Moreover, according to the present invention, it is possible to provide a releasable adhesive sheet and a sheet-form substrate having a releasable adhesive layer formed by curing of this silicone-based releasable adhesive composition.

Furthermore, the sheet-form substrate having the releasable adhesive layer obtained by the present invention has the aforementioned excellent attachment characteristics and releasability characteristics. Thus the sheet-form substrate can be used as a protective film attached to a display or the like of an electronic device, or as a fixing sheet

provided with a printable or writable surface on one surface of the fixing sheet suitable for a window display or the like.

Detailed Description of the Invention

The silicone-based releasable adhesive composition of the present invention includes the organopolysiloxane resin-organopolysiloxane condensation reaction product

(A) obtained by the condensation reaction of

(a1) 100 weight parts of organopolysiloxane resin essentially including the $R^1_3SiO_{1/2}$ unit (each $R^1$ in the formula is independently a hydroxyl group, $C_{1-6}$ alkoxy group, or $C_{1-10}$ substituted or unsubstituted monovalent hydrocarbyl group) and $SiO_{4/2}$ unit, wherein the molar ratio of the $R^1_3SiO_{1/2}$ unit to the $SiO_{4/2}$ unit is 0.6 to 1.0 and the content of the hydroxyl group or alkoxy group is 0.3 to 2.0 weight% with

(a2) 20 to 150 weight parts of straight-chain or branched-chain diorganopolysiloxane that has an average degree of polymerization of 100 to 1000 and that has at least one hydroxyl group or $C_{1-6}$ alkoxy group in each molecule, in the presence of (a3) a condensation reaction catalyst.

This condensation reaction product is a base compound of the silicone-based releasable adhesive composition of the present invention, and this base compound controls the peeling force of the releasable adhesive layer over a wide range and improves the attachment characteristics and releasability characteristics.

From the standpoint of the peeling force and releasability characteristics, the (A) organopolysiloxane resin-organopolysiloxane condensation reaction product preferably has a hydroxyl group content of the condensation reaction product in the range of 0.05 to 0.80 weight%, and in particular, more preferably has a hydroxyl group content in the range of 0.10 to 0.60 weight%.

In the present invention, the aforementioned (A) organopolysiloxane resin-organopolysiloxane condensation reaction product can be suitably obtained by condensation reacting 100 weight parts of the aforementioned component (a1) and 30 to 100 weight parts of the aforementioned component (a2) in the presence of the aforementioned component (a3) and adjusting the hydroxyl group content. Moreover, it is possible to obtain the aforementioned (A) organopolysiloxane resin-organopolysiloxane condensation reaction product by further reacting with (a4) 0.1 to 10.0 weight parts of one or more types of silylating agent after condensation reaction of the aforementioned component (a1) and component (a2). The condensation reaction product of the present invention will be explained below more specifically.

The component (a1) has a ratio of the M units to Q units that is within a certain range, and the component (a1) is an MQ type organopolysiloxane resin that has a certain amount of hydroxyl groups or alkoxy groups. More specifically, component (a1) is an organopolysiloxane resin basically including $R^1_3SiO_{1/2}$ units and $SiO_{4/2}$ units. The molar ratio of $R^1_3SiO_{1/2}$ units to $SiO_{4/2}$ units is 0.6 to 1.0, and the hydroxyl group or alkoxy group content is in the range of 0.3 to 2.0 weight%.

In the formula, each $R^1$ indicates independently a hydroxyl group, an alkoxy group having 1 to 6 carbon atoms, or a substituted or unsubstituted monovalent hydrocarbyl group having 1 to 10 carbon atoms. Here, the hydroxyl group is a hydroxyl group bonded to a silicon atom, i.e. a so-called silanol group (-OH). The alkoxy group having 1 to 6 carbon atoms is exemplified by methoxy group, ethoxy group, propoxy group, and butoxy group. Moreover the substituted or unsubstituted monovalent hydrocarbyl group having 1 to 10 carbon atoms, without particular limitation, preferably has no carbon-carbon double bonds and preferably is a non-reactive monovalent hydrocarbyl group. This monovalent hydrocarbyl group is exemplified by alkyl groups such as the methyl group, ethyl group, propyl group, butyl group, hexyl group, heptyl group, octyl group, nonyl group, decyl group, or the like; aryl groups such as the phenyl group, tolyl group, xylyl group, or the like; aralkyl groups such as the benzyl group, phenethyl group or the like; halogenated alkyl groups such as the 3-chloropropyl group, perfluoroalkyl group (e.g. 3,3,3-trifluoropropyl group or pentafluorobutyl group), or the like; perfluoroether-modified alkyl groups, and cyanoethyl group. This monovalent hydrocarbyl group is preferably the methyl group, phenyl group, or a perfluoroalkyl group from the standpoints of ease of synthesis and the peeling force or releasability characteristics of the obtained releasable adhesive layer.

The component (a1) is an MQ type organopolysiloxane resin basically including M units expressed by $R^1_3SiO_{1/2}$ units and Q units expressed by $SiO_{4/2}$ units. The molar ratio of $R^1_3SiO_{1/2}$ units to $SiO_{4/2}$ units is in the range of 0.6 to 1.0, preferably is in the range of 0.65 to 0.90, and more preferably is in the range of 0.70 to 0.80. When this molar ratio is less than the aforementioned lower limit, compatibility with other siloxane components declines during preparation of the silicone-based releasable adhesive composition. On the other hand, when the upper limit is exceeded, the peeling force or the releasability characteristics of the obtained releasable adhesive layer becomes insufficient. Moreover, the organopolysiloxane resin is a component that undergoes a condensation reaction with the below mentioned component (a2) and is characterized as having a hydroxyl group or alkoxy group content within the molecule that is in the range of

0.3 to 2.0 weight%. The hydroxyl group or alkoxy group content within the component (a1) is preferably in the range of 0.4 to 1.0 weight%, and more preferably is in the range of 0.5 to 0.9 weight%. The content of the hydroxyl group in component (a1) of the present invention is particularly preferably 0.5 to 0.8 weight%. When the content of the hydroxyl group or alkoxy group of component (a1) is less than the aforementioned lower limit, the condensation reaction with the component (a2) becomes insufficient, and also the peeling force, attachment characteristics, and releasability characteristics of the obtained releasable adhesive layer sometimes become insufficient. On the other hand, when the content of the hydroxyl group or alkoxy group of component (a1) exceeds the aforementioned upper limit, problems sometimes occur such as adhesive of the releasable adhesive layer remaining behind particularly after attached for a long time interval, or the like.

The component (a2) is a straight-chain or branched-chain diorganopolysiloxane that has an average degree of polymerization of 100 to 1,000 and has at least one hydroxyl group or alkoxy group having 1 to 6 carbon atoms in each molecule. The (A) organopolysiloxane resin-organopolysiloxane condensation reaction product of the present invention is formed by condensation reaction of the hydroxyl group or alkoxy group of the component (a1) and the component (a2). This component (a2) requires at least one hydroxyl group or alkoxy group having 1 to 6 carbon atoms in each molecule. However, from the standpoint of reactivity, there preferably are two or more hydroxyl groups or alkoxy group having 1 to 6 carbon atoms at the ends of the molecular chain. Moreover the component (a2) is particularly preferably a straight-chain diorganopolysiloxane, since the aforementioned condensation reaction product can be produced stably and has excellent peeling force, attachment characteristics, and releasability characteristics.

The average degree of polymerization of the component (a2) of the present invention must be within the range of 100 to 1,000, more preferably is in the range of 150 to 900, and most preferably is in the range of 200 to 800. When the average degree of polymerization of the component (a2) exceeds the aforementioned upper limit, viscosity of the condensation reaction product obtained by the condensation reaction with the component (a1) becomes extremely high, and blending becomes difficult particularly in a solvent-free type silicone-based releasable adhesive composition. Moreover, such a composition is unrealistic in that the silicone-based releasable adhesive composition cannot be coated on the substrate using normal coating equipment. Moreover, when the average degree of polymerization of the component (a2) is less than the aforementioned lower limit, the condensation reaction product gels, and it is quite difficult to blend in the target silicone-based releasable adhesive composition.

According to the present invention, the component (a2) preferably is a straight-chain diorganopolysiloxane capped at both molecular terminals with hydroxyl groups and is expressed by the molecular formula below.

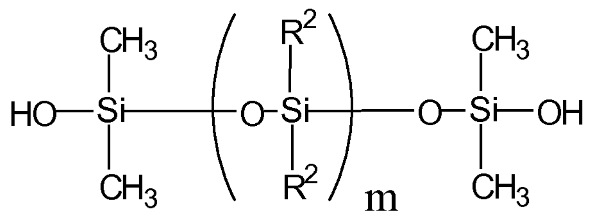

In the formula, each $R^2$ indicates independently a hydroxyl group, alkoxy group having 1 to 6 carbon atoms, or a substituted or unsubstituted non-reactive monovalent hydrocarbyl group having 1 to 10 carbon atoms and lacking a carbon-carbon double bond. The $R^2$ monovalent hydrocarbyl group is exemplified by alkyl groups such as the methyl group, ethyl group, propyl group, butyl group, hexyl group, heptyl group, octyl group, nonyl group, decyl group, or the like; aryl groups such as the phenyl group, tolyl group, xylyl group, or the like; aralkyl groups such as the benzyl group, phenethyl group or the like; halogenated alkyl groups such as the 3-chloropropyl group, perfluoroalkyl group (e.g. 3,3,3-trifluoropropyl group or pentafluorobutyl group), or the like; perfluoroether-modified alkyl groups, and cyanoethyl group. From the standpoints of ease of synthesis and releasability, this is preferably the methyl group, phenyl group, or perfluoroalkyl group. Particularly, at least 90 mol% of $R^2$ is preferably the methyl group, and most preferably at least 95 mol% of $R^2$ is the methyl group.

The average degree of polymerization m of the straight-chain diorganopolysiloxane capped at both molecular terminals with hydroxyl groups and expressed by the aforementioned structural formula is a number in the range of 200 to 800. This range is advantageous because the obtained condensation reaction product has low viscosity and is easy to handle, and because gelling during the condensation reaction does not occur and production can be performed stably. The most preferable average degree of polymerization m for the present invention is in the range of 250 to 750.

The aforementioned (A) organopolysiloxane resin-organopolysiloxane condensation reaction product can be obtained by condensation reacting between 100 weight parts of the aforementioned component (a1) organopolysiloxane resin and 20 to 150 weight parts of the component (a2) diorganopolysiloxane in the presence of the (a3) condensation reaction catalyst. In order to stably obtain a releasable adhesive layer having excellent peeling force controllability, attachment characteristics, and releasability characteristics, a reaction weight ratio of the component (a1)/component

(a2) needs to be in the range of 1/0.2 to 1/1.5, and particularly preferably is in the range of 1/0.3 to 1/1.0. That is to say, 100 weight parts of the component (a1) and 30 to 100 weight parts of the component (a2) are particularly preferably condensation reacted in the presence of the (a3) condensation reaction catalyst, and an organopolysiloxane resin-organopolysiloxane condensation reaction product can be readily obtained that has a hydroxyl group content in the range of 0.10 to 0.60 weight%.

On the other hand, when the reaction weight ratio of the component (a1)/component (a2) is lower than the aforementioned lower limit or is greater than or equal to 1/2.0, peeling strength, attachment characteristics, and releasability characteristics of the obtained releasable adhesive layer become insufficient. On the other hand, when the aforementioned reaction weight ratio exceeds the aforementioned upper limit and is in the range less than 1/2.0 (i.e. 1/1.5 < "reaction weight ratio of component (a1)/component (a2)" < 1/2.0), gelation occurs during the condensation reaction, and blending in the target silicone-based releasable adhesive composition becomes extremely difficult.

Component (a3) is the condensation reaction catalyst, and this is a component that promotes the condensation reaction between the component (a1) and component (a2). Although this condensation reaction promotion catalyst may be used as one type or two or more types of acidic, basic, organometallic, or the like condensation catalyst, preferred condensation catalysts are selected from among ammonia (gas), ammonia water, sodium hydroxide, barium hydroxide, amines, carboxylic acid salts of organic amines, quaternary ammonium salts, carboxylic acids, and metal salts of carboxylic acids. The use of volatile ammonia, amines, or the like is particularly advantageous since it is possible to stop the reaction and readily remove the condensation reaction catalyst from the reaction system after the condensation reaction by heating and reducing pressure or the like.

Preferred amines as the component (a3) of the present invention are exemplified by amine compounds and salts thereof, such as primary amines such as methylamine, ethylamine, propylamine, hexylamine, butanolamine, and butylamine; secondary amines such as dimethylamine, diethylamine, diethanolamine, dipropylamine, dibutylamine, dihexylamine, ethylamylamine, imidazole, and propylhexylamine; tertiary amines such as trimethylamine, triethylamine, tripropylamine, tripropanolamine, pyridine, N-methylimidazole, and methyl propylhexyl amine; dodecylamine phosphate, tetramethyl guanidine, and diazabicyclo nonane. Similarly, preferred carboxylic acid salts of organic amines are exemplified by diethyl ammonium acetate, butylammonium octoate, n-hexylammonium-2-ethylhexanoate, and trimethylammonium laurate.

Suitable quaternary ammonium salts are exemplified by tetramethyl ammonium acetate, methyl ethyl dibutyl ammonium chloride, dioctadecyl dimethylammonium chloride, and tetramethyl guanidine-2-ethyl hexanoate. Suitable carboxylic acids are exemplified by acetic acid, propanoic acid, butanoic acid, formic acid, stearic acid, tetradecanoic acid, hexadecanoic acid, dodecanoic acid, decanoic acid, 3,6-dioxaheptanoic acid, and 3,6,9-trioxadecanoic acid. Metal salts of carboxylic acids may be used, where the metal is selected from among Li, Na, K, Ce, and Ca. The metal salts of carboxylic acids are exemplified by potassium formate and potassium acetate.

The content of the hydroxyl group within this (A) organopolysiloxane resin-organopolysiloxane condensation reaction product of the present invention is preferably in the range of 0.05 to 0.80 weight%. This hydroxyl group content is more preferably in the range of 0.10 to 0.60 weight%, and most preferably is in the range of 0.20 to 0.50 weight%. By setting the hydroxyl group content of the condensation reaction product to be within the aforementioned range, the releasable adhesive layer formed by curing the silicone-based releasable adhesive composition of the present invention has excellent attachment characteristics and releasability characteristics, compatibility with other siloxane components composing the silicone-based releasable adhesive composition improves, and it is possible to obtain a uniform composition. On the other hand, when the hydroxyl group content in this condensation reaction product exceeds the aforementioned upper limit, when blended in the silicone-based releasable adhesive composition, separation may occur between the condensation reaction product (i.e. component (A)) and other siloxane components. When the hydroxyl group content is less than the aforementioned lower limit, the peeling force of the releasable adhesive layer becomes insufficient, and sufficient attachment characteristics may not be realized.

The content of the hydroxyl group in the aforementioned condensation reaction product may be controlled by reaction time, reaction weight ratio, and by selection of the type of the organopolysiloxane resin (i.e. component (a1)) and the diorganopolysiloxane (i.e. component (a2)).

Furthermore, after causing the condensation reaction between the aforementioned component (a1) and component (a2) in the presence of the (a3) condensation reaction catalyst, an organopolysiloxane resin-organopolysiloxane condensation reaction product may be obtained that has a certain hydroxyl group content by causing reaction with (a4) one or more types of silylating agents. The hydroxyl group content of the condensation reaction product can be easily adjusted by use of (a4) one or more types of silylating agents, and this has the advantage of obtaining a condensation reaction product that has excellent peeling force and compatibility with other siloxane components in solution.

The one or more types of silylating agent (i.e. component (a4)) is used with the object of introducing a silyl group such as trimethylsilyl group that has strong hydrophobicity to a part of the hydroxyl groups of the condensation reaction product, realizing further stabilized peeling force, attachment characteristics, and releasability characteristics by adjusting this hydroxyl group content, improving compatibility with other siloxane components that are hydrophobic,

and suppressing separation of the condensation reaction product from the siloxane component in solution. The amount of the component (a4) used may be selected appropriately according to the aforementioned reaction weight ratio of between component (a1) and component (a2), the desired peeling force, the application of use of this silicone-based releasable adhesive composition, or the like. Relative to 100 weight parts of the component (a1), the amount of the component (a4) used is preferably 0.1 to 10.0 weight parts, and more preferably is 1 to 8.0 weight parts.

The one or more types of silylating agent (i.e. component (a4)) is preferably a trialkyl silylating agent, and a trimethyl silylating agent is particularly preferred since it is readily obtained. This silylating agent is exemplified by silazane compounds expressed by the formula $((CH_3)_3Si)_2NR$ (in the formula, R is a hydrogen or lower alkyl group). More specific examples include hexamethyldisilazane, N-methyl-hexamethyldisilazane, N-ethyl-hexamethyldisilazane, hexamethyl-N-propyldisilazane, or similar silazane compounds. Due to good reactivity, the use of hexamethyldisilazane is particularly preferred for the present invention.

Silane compounds expressed by the formula $(CH_3)_3SiY$ (in the formula, Y is a group selected from among a halogen atom, -OH, -OR, or $-NR_2$ (R has the same meaning as above)) may be used as other trimethyl silylating agents. More specifically, such silane compounds are exemplified by trimethylchlorosilane, trimethylsilanol, methoxytrimethylsilane, ethoxytrimethylsilane, propoxytrimethylsilane, dimethylaminotrimethylsilane, diethylaminotrimethylsilane, or the like. The use of trimethylsilanol is particularly preferred due to good reactivity.

After dissolving the aforementioned component (a1) and component (a2) at the target weight ratio in an organic solvent and blending the mixture uniformly, a catalytic quantity of the (a3) condensation reaction catalyst such as ammonium water and the like is added, and the condensation reaction product (i.e. component (A)) is synthesized by causing reaction at a certain temperature and for a certain time interval. Depending on the scale of the reaction or the like, the reaction temperature generally ranges from room temperature (25°C) to 80°C, and the reaction time interval generally is 0.5 to 10 hours.

After the aforementioned reaction, temperature may be raised to the refluxing temperature of the organic solvent, and condensation water, ammonia, or the like components may be removed to obtain the target condensation reaction product of the aforementioned component (a1) and component (a2). Moreover, after removal of the aforementioned condensation water, ammonia, or similar components, by adding one or more types of silylating agents (i.e. the component (a4)) and by causing reaction at 70 to 90°C (more preferably in the vicinity of 85°C), the hydroxyl group content in this condensation reaction product can be adjusted and the desired condensation reaction product can be obtained.

The silicone-based releasable adhesive composition of the present invention may be a solvent-free type composition, or may be a solvent-containing type composition dispersed in an organic solvent such as xylene, toluene, or the like.

Particularly, if the aforementioned condensation reaction product is blended in a solvent-free type silicone-based releasable adhesive composition, polysiloxanes appropriate for the target viscosity are preferably added as a viscosity adjusting agent to the obtained condensation reaction product, and the solvent is preferably removed to obtain the target silicone-based releasable adhesive composition. From the standpoint of blending stability, the aforementioned polysiloxanes are exemplified by cyclic polysiloxanes having a viscosity of 0.65 to 1,000 mPa·s at 25°C or straight-chain or branched-chain dimethylpolysiloxanes capped at the end of the molecular chain with alkenyl dimethylsiloxy groups, trimethylsiloxy groups, dimethyl monohydroxysiloxy groups, or dimethyl monoalkoxysiloxy groups, and mixtures of such compounds. Preferred examples are straight-chain dimethylpolysiloxanes having a viscosity of 5 to 500 mPa·s at 25°C and cyclic methylpolysiloxanes formed from siloxane units and having a degree of polymerization of 3 to 7. Particularly preferably, the aforementioned polysiloxane is exemplified by straight-chain dimethylpolysiloxanes capped at the end of the molecular chain with alkenyl dimethylsiloxy groups that are also in component (B) of the silicone-based releasable adhesive composition as described below. More specifically, the aforementioned polysiloxane is exemplified by straight-chain dimethylpolysiloxanes capped at the end of the molecular chain with the alkenyl dimethylsiloxy group as expressed by the formula below.

Formula: $M^{Ra}D_pM^{Ra}$

In the formula, $M^{Ra}$ is a monofunctional alkenyl dimethylsiloxy group expressed by $(CH_3)_2(Ra)SiO_{1/2}$, and Ra is an alkenyl group having 2 to 8 carbon atoms. D is a bifunctional siloxane unit expressed by $(CH_3)_2SiO_{2/2}$, and p is a number that is preferably in the range of 5 to 200. Ra is preferably the vinyl group or hexenyl group, and p is particularly preferably a number in the range of 20 to 100.

If the aforementioned condensation reaction product is blended in a solvent type silicone-based releasable adhesive composition, an organic solvent suitable for the target viscosity is added to the obtained condensation reaction product to obtain the target silicone-based releasable adhesive composition. The organic solvent is exemplified by aromatic hydrocarbon solvents such as toluene, xylene, or the like; aliphatic hydrocarbon solvents such as hexane, octane, isoparaffin, or the like; ether type solvents such as diisopropyl ether, 1,4-dioxane, or mixtures of such solvents,

or the like. The use of aromatic hydrocarbon solvents such as toluene, xylene, or the like, and aliphatic hydrocarbon solvents such as hexane, octane, isoparaffin, or the like is preferred.

The condensation reaction product (i.e. component (A)) may be further used by dispersing in one or more types of olefin expressed by the structural formula (1) or (2) below. By blending such olefins in the silicone-based releasable adhesive composition of the present invention, viscosity of the component (A) can be easily adjusted, and it is possible to blend the olefin into the silicone-based releasable adhesive composition more easily. Moreover, such olefins are widely known release adjusting agents, and such olefins are extremely useful as additives, due to the ability to control the viscosity of the total composition and the peeling force of the silicone-based releasable adhesive composition of the present invention within a desired range.

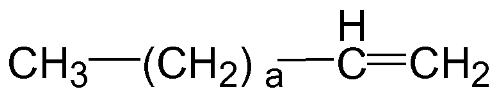

(1)

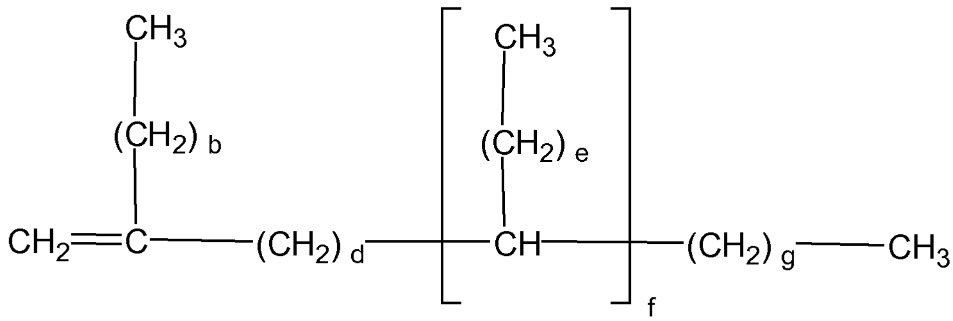

(2)

In the formula, a is a number from 1 to 27; d and f are each independently a number from 0 to 20; b and e are each independently a number from 1 to 12; and g is a number from 3 to 14.

The olefin component having the aforementioned structure is a liquid or solid at room temperature (25°C). When the number of carbon atoms exceeds 20, the olefin component sometimes becomes a solid at room temperature. Volatility increases when the number of carbon atoms is less than 6. Therefore, when the olefin is used in order to adjust viscosity of the condensation reaction product (i.e. component (A)), an olefin is used that has 6 to 20 carbon atoms, preferably has 8 to 18 carbon atoms, and more preferably has 10 to 16 carbon atoms and is liquid at room temperature. Furthermore, by dispersing in the aforementioned organic solvent, it is possible to use a solid form olefin that has more than 20 carbon atoms. Moreover, a combination of two or more olefins having different numbers of carbon atoms can be used, and a combination of straight-chain olefins and branched-chain olefins can be used.

Specific examples of olefins that can be used appropriately are straight-chain olefins selected from among 1-dodecene, 1-tridecene, 1-tetradecene, 1-pentadecene, 1-hexadecene, 1-heptadecene, and 1-octadecene; and branched olefins expressed by the structural formula (3) or (4) below.

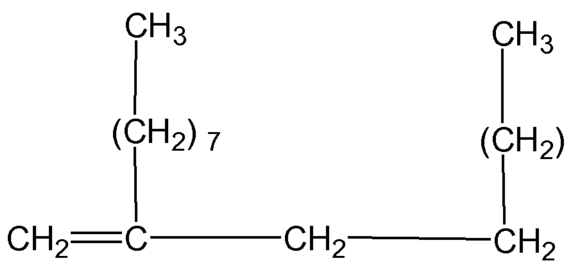

(3)

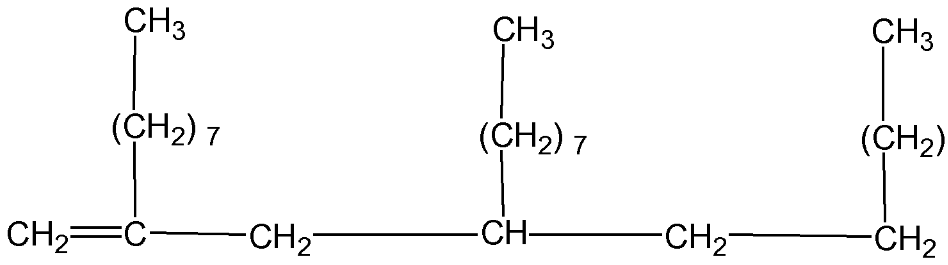

(4)

The condensation reaction product (i.e. component (A)) may be blended in the silicone-based releasable adhesive composition by dispersing in one or more types of olefins expressed by the aforementioned structural formula (1) or (2). Although no particular limitation is placed on the blended amount, relative to 100 weight parts of the aforementioned organopolysiloxane resin-organopolysiloxane condensation reaction product, 0.1 to 50 weight parts of the aforementioned olefin is preferably blended. From the standpoint of adjusting viscosity of the condensation reaction product, the blended amount is more preferably in the range of 0.5 to 20 weight parts, and particularly preferably is blended in the range of 0.5 to 10 weight parts. On the other hand, although the peeling force of the releasable adhesive layer increases, it is undesirable for the aforementioned olefin content to exceed the aforementioned upper limit, since drawbacks such as an increased amount of transfer of silicone, coloration of the film, leaving behind of traces of colored adhesive, or the like may occur.

The preferred components and composition of the silicone-based releasable adhesive composition of the present invention will be explained next by providing examples. Moreover, unless indicated otherwise, the term "peeling force" refers to the peeling force (g/inch) of the releasable adhesive layer as measured by the 180-degree peel test.

The silicone-based releasable adhesive composition of the present invention preferably includes: (A) 100 weight parts of the organopolysiloxane resin-organopolysiloxane condensation reaction product (i.e. component (A)), (B) 10 to 900 weight parts of an organopolysiloxane that has at least 2 alkenyl groups bonded to silicon atoms in each molecule, (C) an amount of an organohydrogenpolysiloxane having at least 2 hydrogen atoms bonded to silicon atoms within each molecule so that the molar ratio of the amount of silicon-bonded hydrogen atoms within component (C) to the amount of alkenyl group in component (B) is from 0.3 to 5.0, and (D) a catalytic amount of a platinum hydrosilylation reaction catalyst.

The silicone-based releasable adhesive composition of the present invention is formed by including the aforementioned (A) through (D) components. However, from the standpoint of improvement of the occurrence of remnant adhesive and the transferability of silicone, the silicone-based releasable adhesive composition of the present invention preferably does not substantially include an organopolysiloxane resin (hereinafter, also referred to as the "MQ resin") basically formed from an unreacted $R^1_3SiO_{1/2}$ unit (in the formula, each $R^1$ indicates independently a hydroxyl group, an alkoxy group having 1 to 6 carbon atoms, or a substituted or unsubstituted monovalent hydrocarbyl group having 1 to 10 carbon atoms) and $SiO_{4/2}$ unit; or alternatively, the silicone-based releasable adhesive composition of the present invention includes the organopolysiloxane resin at a concentration less than 1.0 weight% in the total composition. The above mentioned term "unreacted" means that a condensation reaction product is not formed with other components, in contrast to the component (a1), which is a raw material of the component (A).

The component (B) is one of the major components of the silicone-based releasable adhesive composition of the present invention, and this is an organopolysiloxane that has at least 2 alkenyl groups bonded to a silicon atom in each molecule. Due to catalytic action of the component (D), the component (B) and the component (C) are crosslinked by a hydrosilylation reaction. Although the molecular structure is generally a straight-chain, the molecular structure may be a branched-chain.

The silicon-bonded alkenyl groups are preferably alkenyl groups having from 2 to 10 carbon atoms, and examples thereof include vinyl groups, allyl groups, butenyl groups, pentenyl groups, hexenyl groups, heptenyl groups, octenyl groups, nonenyl groups, and decenyl groups. Of these, vinyl groups are preferable, but allyl groups and hexenyl groups are also preferable. The content of the alkenyl groups in the molecule is preferably from 0.1 to 20 mol%, and more preferably from 0.2 to 10.0 mol% of all the organic groups bonded to the silicon atom in a molecule. An even more preferable range of the content is from 0.5 to 5.0 mol%. If the content of the alkenyl groups is less than the lower limit described above, a curing rate sufficient for practical use may not be obtained. If the content exceeds the upper limit described above, peel force of the cured film may increase excessively. The alkenyl groups can be bonded to a silicon atom at the end of the molecular chain, to a silicon atom in a sidechain, or to both a silicon atom at the end of the molecular chain and a silicon atom in a sidechain.

Examples of organic groups, other than the alkenyl groups bonded to the silicon atom, in the component (B) include methyl groups, ethyl groups, propyl groups, butyl groups, hexyl groups, heptyl groups, octyl groups, nonyl groups, decyl groups, and similar alkyl groups; phenyl groups, tolyl groups, xylyl groups, and similar aryl groups; benzyl groups,

phenethyl groups, and similar aralkyl groups; 3-chloropropyl groups, perfluoroalkyl groups expressed by the formula: $C_mF_{2m+1}CH_2CH_2$- (where "m" is an integer from 1 to 10; e.g. 3,3,3-trifluoropropyl groups and pentafluorobutyl groups), and similar halogenated alkyl groups; perfluoroether-modified alkyl groups expressed by the formulae: $F[CF(CF_3)CF_2O]_nCF(CF_3)CF_2OCH_2CH_2CH_2$-, $F[CF(CF_3)CF_2O]_nCF(CF_3)CH_2OCH_2CH_2CH_2$-, $F[CF(CF_3)CF_2O]_nCF_2CF_3CH_2CH_2$-, $F[CF(CF_3)CF_2O]_nCF(CF_3)CH_2CH_2$-, $C_mF_{2m+1}CH_2CH_2OCH_2CH_2CH_2$-, and $C_mF_{2m+1}CH_2OCH_2CH_2CH$- (where "n" is an integer from 1 to 5, and "m" is an integer from 3 to 10); and cyanoethyl groups. Of these, from the perspectives of ease of synthesis and characteristics of the cured film, alkyl groups, phenyl groups, or perfluoroalkyl groups (however, having not less than 50 mol% methyl groups) are preferable. More preferably, all of the organic groups other than the alkenyl groups are methyl groups.

Specific examples of the component (B) include dimethylpolysiloxane capped at both molecular terminals with dimethylvinylsiloxy groups, dimethylsiloxane-methylvinylsiloxane copolymers capped at both molecular terminals with trimethylsiloxy groups, dimethylsiloxane-methylvinylsiloxane copolymers capped at both molecular terminals with dimethylvinylsiloxy groups, dimethylsiloxane-methylvinylsiloxane copolymers capped at both molecular terminals with dimethylethoxysiloxy groups, dimethylsiloxane-methylphenylsiloxane copolymers capped at both molecular terminals with dimethylvinylsiloxy groups, and dimethylsiloxane-methyl (3,3,3-trifluoropropyl)siloxane copolymers capped at both molecular terminals with dimethylvinylsiloxy groups. Moreover, the component (B) may be a mixture of two or more types of different organopolysiloxanes.

Although the component (B) may be a liquid or in a raw rubber (=gum-like) state at room temperature, the component (B) is preferably in a liquid state when used for a solvent-free composition. Specifically, the component (B) is preferably in a gum-like state organopolysiloxane that has a viscosity of 50 to 1,000,000 mPa·s, more preferably has a viscosity of 200 to 10,000 mPa·s, and particularly preferably has a viscosity of 400 to 5,000 mPa·s. When the component (B) is in a raw rubber state at room temperature, the component (B) may be dissolved in an organic solvent such as xylene, toluene, or the like, or the component (B) may be a mixture with an organopolysiloxane that is liquid at room temperature. Viscosity of this mixture at room temperature is preferably 200 to 10,000 mPa·s and particularly preferably is 400 to 5,000 mPa·s.

Organopolysiloxanes that can be suitably used as the component (B) are organopolysiloxanes that are liquid at room temperature and have a relatively low degree of polymerization having a viscosity of 50 to 5,000 mPa·s, organopolysiloxanes that are gum-like states at room temperature and have a relatively high degree of polymerization having a viscosity more than 10,000 mPa·s, or mixtures of these organopolysiloxanes.

By changing the blended amount of the component (B) in the silicone-based releasable adhesive composition of the present invention, it is possible to control the peeling force of the releasable adhesive layer over a wide range. More specifically, when releasable adhesive layers are formed of the same thickness, the peeling force declines as the blended amount of the component (B) relative to the condensation reaction product (i.e. component (A)) increases. On the other hand, the peeling force declines when the blended amount of the component (B) relative to the condensation reaction product (i.e. component (A)) declines.

Generally in order to obtain a releasable adhesive layer that has an ultra-low peeling force to a low peeling force of about 1 to 20 g/inch, relative to 100 weight parts of the organopolysiloxane resin-organopolysiloxane condensation reaction product (i.e. component (A)), the blended amount of the component (B) is preferably in the range of 150 to 900 weight parts. Moreover, in order to obtain a releasable adhesive layer that has an ultra-low peeling force to a relatively high peeling force of about 1 to 200 g/inch, relative to 100 weight parts of the organopolysiloxane resin-organopolysiloxane condensation reaction product (i.e. component (A)), the blended amount of the component (B) is preferably in the range of 10 to 150 weight parts.

The component (C) is an organohydrogenpolysiloxane that has at least 2 hydrogen atoms bonded to silicon atoms within each molecule, has a viscosity at 25°C of 1 to 1,000 mPa·s, has at least 2 silicon-bonded hydrogen atoms in each molecule, and preferably is an organohydrogenpolysiloxane where the silicon-bonded organic group is a phenyl group or an alkyl group having 1 to 8 carbon atoms. It is necessary for the component (C) to have two or more silicon-bonded hydrogen atoms in the molecule in order to crosslink the component (B) and, preferably, the component (C) has three or more silicon-bonded hydrogen atoms per molecule.

The bonding sites of the silicon-bonded hydrogen atoms are not particularly limited, and examples thereof include molecular terminals, and/or sidechains. The content of the silicon-bonded hydrogen atoms is preferably from 0.1 to 20 weight% and more preferably from 0.5 to 18 weight%.

Examples of the silicon-bonded organic groups include methyl groups, ethyl groups, propyl groups, butyl groups, octyl groups, and similar alkyl groups having from 1 to 8 carbon atoms and phenyl groups, and not less than 50% of a total thereof is preferably alkyl groups having from 1 to 8 carbon atoms. Of these alkyl groups, from the perspectives of cured layer characteristics and ease of manufacture, methyl groups are preferable. The component (C) may have a straight, branched, networked, or cyclic molecular structure.

A viscosity at 25°C of the component (C) is from 1 to 1,000 mPa·s and preferably from 5 to 500 m·Pas.

Volatilization of the component (C) readily occurs from within the silicone-based releasable adhesive composition when viscosity at 25°C is below the aforementioned lower limit. Curing time of the silicone-based releasable adhesive composition becomes prolonged when the aforementioned upper limit is exceeded.

Specific examples of the component (C) include methylhydrogenpolysiloxanes capped at both molecular terminals with trimethylsiloxy groups, dimethylsiloxane-methylhydrogensiloxane copolymers capped at both molecular terminals with trimethylsiloxy groups, dimethylsiloxane-methylhydrogensiloxane copolymers capped at both molecular terminals with dimethylhydrogensiloxy groups, cyclic methylhydrogenpolysiloxane, cyclic methylhydrogensiloxane-dimethylsiloxane copolymers, tris(dimethylhydrogensiloxy)methylsilanes, and tetra(dimethylhydrogensiloxy)silanes.

A compounding ratio of the component (B) to the component (C) is preferably such that a molar ratio of the amount of silicon-bonded hydrogen atoms in the component (C) to the amount of alkenyl groups in the component (B) is from 0.3 to 5.0. Curability readily declines when this molar ratio becomes lower than 0.3. More specifically, cure rate becomes excessively slow, and physical strength of the releasable adhesive layer becomes low. When this molar ratio is larger than 5.0, the peeling force increases, and an excess of the component (C) results in a tendency for sticking (blocking) to the attached object. Additionally, temporal change of the peeling force may increase and practical usability may be impaired. From these perspectives, amounts such that the molar ratio is from 0.7 to 2.0 are preferable.

The component (D) is a platinum hydrosilylation reaction catalyst for promoting curing and crosslinking by a hydrosilylation reaction between the component (B) and component (C). This platinum-based catalyst is exemplified by chloroplatinic acid, alcohol solutions of chloroplatinic acid, aldehyde solutions of chloroplatinic acid, olefin complexes of chloroplatinic acid, complexes between chloroplatinic acid and diketones; platinum alkenyl siloxane complexes such as complexes between chloroplatinic acid and divinyltetramethyldisiloxane, complexes between chloroplatinic acid and tetramethyl tetravinyl cyclotetrasiloxane, platinum divinyltetramethyldisiloxane complexes, platinum tetramethyl tetravinyl cyclotetrasiloxane complexes, or the like; platinum tetrachloride, platinum fine particles, alumina fine particles, or silica fine particles carrying fine particles of platinum, platinum black, platinum olefin complexes, platinum diketone complexes, and platinum carbonyl complexes.

From the perspectives of compatibility with the component (B) and the component (C), solubility in organic solvents, and curing reaction promotion capability, the component (D) is preferably chloroplatinic acid, a complex of chloroplatinic acid and a divinyltetramethyl disiloxane, a complex of chloroplatinic acid and a tetramethyltetravinylcyclotetrasiloxane, a platinum-divinyltetramethyl disiloxane complex, a platinum-tetramethyltetravinylcyclotetrasiloxane complex, or a similar platinum-alkenylsiloxane complex.

The blended amount of the component (C) is a catalytic amount, i.e. is an amount sufficient to cause curing of the silicone-based releasable adhesive composition of the present invention. In consideration of curability of this composition, adhesion to the substrate, and economics, the amount of component (C) is, in terms of the amount of platinum metal, per 100 weight parts of the total of the component (B) and component (C), preferably in the range of 5 to 1,000 ppm and more preferably in the range of 10 to 300 ppm.

When the component (B) has a raw rubber state or similar high viscosity, then it is not possible to coat the composition thinly on the sheet-form substrate. Thus the silicone-based releasable adhesive composition of the present invention may be used as a solvent-type silicone-based releasable adhesive composition by further blending 10 to 3,000 weight parts of an (E) organic solvent in 100 weight parts of the total amount of the aforementioned component (A) through component (D).

The component (E) is an organic solvent, and no particular limitation is placed on this organic solvent as long as the organic solvent dissolves component (A) through component (D) uniformly and the organic solvent does not impede curing. Specific examples of the organic solvent include toluene, xylene, and similar aromatic hydrocarbons; pentane, hexane, heptane, and similar aliphatic hydrocarbons; trichloroethylene, perchloroethylene, trifluoromethylbenzene, 1,3-bis(trifluoromethyl)benzene, methylpentafluorobenzene, and similar halogenated hydrocarbons; ethyl acetate; methyl ethyl ketone; and methyl isobutyl ketone. Of these, from the perspectives of solubility, safety, and cost performance, toluene, xylene, and n-hexane are preferable.

In addition to the components described above, the silicone-based releasable adhesive composition of the present invention preferably includes an (F) hydrosilylation reaction inhibitor in order to suppress gelling and curing at room temperature, enhance storage stability, and impart heat curability characteristics to the composition. Examples of the hydrosilylation reaction inhibitor include acetylene-based compounds, ene-yne compounds, organic nitrogen compounds, organic phosphorus compounds, and oxime compounds. Specific examples thereof include 3-methyl-1-butyne-3-ol (methylbutynol), 3,5-dimethyl-1-hexyne-3-ol, 3-methyl-1-pentene-3-ol, phenylbutynol, and similar alkynyl alcohols; 3-methyl-3-pentene-1-yne, 3,5-dimethyl-1-hexyne-3-yne, 1-ethynyl-1-cyclohexanol, benzotriazole, and methylvinylcyclosiloxane. A blended amount of the hydrosilylation reaction inhibitor, with the total amount of the components (A) to (D) described above being 100 weight parts, is generally in a range from 0.001 to 5 weight parts, but may be selected appropriately depending on the type of each component used, performance and amount of the hydrosilylation reaction platinum-based catalyst, the amount of alkenyl groups in the component (B), and the amount of silicon-bonded hydrogen atoms in the component (C).

The silicone-based releasable adhesive composition of the present invention may be blended appropriately with a (G) alkoxysilane compound such as tetramethoxysilane, tetraethoxysilane, dimethyldimethoxysilane, methylphenyl dimethoxysilane, methylphenyl diethoxysilane, phenyltrimethoxysilane, methyltrimethoxysilane, methyltriethoxysilane, vinyltriethoxysilane, allyltrimethoxysilane, allyltriethoxysilane, 3-glycidoxypropyltrimethoxysilane, 3-glycidoxypropyltriethoxysilane, 3-methacryloxypropyltrimethoxysilane, or the like. During curing of the silicone-based releasable adhesive composition of the present invention on the substrate and forming the releasable adhesive layer, the alkoxysilane compound (i.e. component (G)) is an adhesion improvement agent for improving adhesion of the releasable adhesive layer to the substrate. Although the amount used may be selected appropriately according to curing conditions, the blended amount of the component (G) is preferably within the range of 1 to 30 weight parts relative to 100 weight parts of the organopolysiloxane resin-organopolysiloxane condensation reaction product (i.e. component (A)).

As may be required, other arbitrary components may be added to the silicone-based releasable adhesive composition of the present invention. For example, antioxidants, fire retardants, photostabilizers, UV absorbers, heat resistance improvement agents, fillers, pigments, leveling agents, anti-static agents, antifoam agents, non-reactive organopolysiloxanes, or the like may be added.

The additives used preferably are: phenol based, quinone based, amine based, phosphorous based, phosphite based, sulfur based, thioether based, or similar antioxidants; hindered amine type, triazole type, benzophenone type, hindered phenol type, or similar photostabilizers; salicylate type or cyanoacrylate type organic UV absorbers; titanium oxide, calcium carbonate, zinc oxide, or similar inorganic type UV absorbers; phosphate ester type, halogen type, phosphorous type, antimony type, or similar fire retardants; or cation activators, anion activators, non-ionic activators, or similar antistatic agents. The additive may be selected appropriately depending on the use of the substrate provided with the releasable adhesive layer formed by curing the silicone-based releasable adhesive composition of the present invention. For example, for the application as a protective film of an electronic device such as a display or the like, an antistatic agent is preferably blended. For the application as an ornamental sheet used in indoors such as in a kitchen or the like, a fire retardant is preferably blended.

Additionally, depending on the method by which the composition is applied in the manufacturing process, a silica fine particle or similar known thickening agent can be compounded in order to obtain a desired thickness of the coating.

From the standpoint of coating on the sheet-form substrate, overall viscosity of the silicone-based releasable adhesive composition of the present invention is preferably in the range of 50 to 2,000 mPa·s at 25°C for a solvent-free coating; and this viscosity is preferably in the range of 50 to 5,000 mPa·s at 25°C for a solvent-type coating.

The silicone-based releasable adhesive composition of the present invention may be readily manufactured by uniform blending of each of the aforementioned components. Although no particular limitation is placed on the order of blending of each of the components, if the silicone-based releasable adhesive composition is not used immediately after blending, then a mixture of the component (A) and component (B) and a mixture of the component (C) and component (D) are preferably stored separately, and the two mixtures are preferably mixed immediately prior to use.

The aforementioned type of silicone-based releasable adhesive composition of the present invention is coated on the substrate and is cured to form the releasable adhesive layer. In particular, the aforementioned releasable adhesive layer is preferably formed on at least one face of the sheet-form substrate, and the releasable adhesive layer may be used without limitation for applications requiring peeling force, attachment characteristics, and releasability characteristics.

Conventional methods may be used for coating, such as the roll coating method, gravure coating method, wire doctor coating method, air knife coating method, dipping coating method, or the like. More specific coating methods are exemplified by use of a comma coater, lip coater, roll coater, die coater, knife coater, blade coater, rod coater, kiss coater, gravure coater, screen coater, dipping coater, casting coater, or the like.

Although the coated amount may be selected appropriately according to the desired peeling force and the application of the sheet-form substrate that has the releasable adhesive layer, the coated amount (calculated on a solids basis, i.e. non-volatile components at the time of curing) may be 0.01 to 300 $g/m^2$ and preferably is 0.5 to 200 $g/m^2$. Moreover, the silicone-based releasable adhesive composition of the present invention is coated on the entire substrate, or is coated partially on the substrate at locations that require the releasable adhesive layer. The coated amount, as expressed by the thickness of the cured releasable adhesive layer, may be set to 0.5 to 200 $\mu$m, and particularly may be set to 5 to 100 $\mu$m.

The thickness of the aforementioned releasable adhesive layer affects the peeling force of the releasable adhesive layer of the present invention. For a releasable adhesive layer that has an ultra-low peeling force to a low peeling force (i.e. about 1 to 20 g/inch peeling force), the thickness of the cured releasable adhesive layer is preferably in the range of 5 to 100 $\mu$m, and particularly preferably is in the range of 10 to 90 $\mu$m. Relative to 100 weight parts of the organopolysiloxane resin-organopolysiloxane condensation reaction product (i.e. component (A)), the releasable adhesive layer is preferably formed by curing a silicone-based releasable adhesive composition in which the blended amount of the component (B) is in the range of 150 to 900 weight parts.

On the other hand, for a releasable adhesive layer that has an ultra-low peeling force to a relatively high peeling force (i.e. peeling force of about 1 to 200 g/inch), thickness of the cured releasable adhesive layer is preferably in the range of 2 to 60 μm, and particularly preferably is in the range of 10 to 50 μm. Relative to 100 weight parts of the organopolysiloxane resin-organopolysiloxane condensation reaction product (i.e. component (A)), the releasable adhesive layer is preferably formed by curing a silicone-based releasable adhesive composition in which the blended amount of the component (B) is in the range of 10 to 150 weight parts.

Although a temperature of 50 to 200°C is generally suitable as the curing temperature of the silicone-based releasable adhesive composition of the present invention on the substrate, a temperature higher or equal to 200°C is permissible as long as the substrate has good heat resistance properties. The method of heating is not particularly limited, and examples thereof include heating in a hot-air circulation oven, passing through a long heating furnace, and heat ray radiation by an infrared lamp or halogen lamp. The silicone-based releasable adhesive composition may also be cured using a combination of heating and UV light irradiation. Curing of the silicone-based releasable adhesive composition is preferably carried out from 50 to 200°C and, in this case, heating time can be set to be from 1 second to 5 minutes.

The substrate provided with the releasable adhesive layer formed by curing the silicone-based releasable adhesive composition of the present invention is not particularly limited depending on the application. However, a sheet-form substrate is preferred, and specific examples include paper, glassine paper, corrugated paper, clay coated paper, polyolefin laminated paper (especially polyethylene laminated paper), plastic films obtained from a synthetic resin (i.e. polyesters, polypropylene, polyethylene, polyvinyl chloride, polytetrafluoroethylene, polyimides, or the like), clothes, synthetic fibers, metal foils, or the like. When the silicone-based releasable adhesive composition of the present invention is coated uniformly on the surface of the aforementioned sheet-form substrate and then heated under conditions sufficient for the hydrosilylation reaction and crosslinking between the component (B) and component (C), a cured film having a suitable degree of release resistance to adhesive substance is formed on the surface of these sheet-form substrates. Moreover, this cured film has excellent adhesion to the sheet-form substrate.

When the releasable adhesive layer formed by curing the silicone-based releasable adhesive composition of the present invention is substantially formed from the aforementioned (A) through (G) components, a releasable adhesive layer is formed that has excellent transparency. Thus, by selecting a substantially transparent substrate (i.e. a polyolefin or the like) as the aforementioned sheet-form substrate, it is possible to obtain a releasable adhesive sheet that has excellent transparency.

Although a suitable sheet-form substrate of the present invention may be selected appropriately according to the application thereof, a plastic film obtained from a synthetic resin is particularly preferred. Without particular limitation, the following may be used as the synthetic resin: polyesters such as polyethylene terephthalate, polyethylene naphthalate, or the like; polycarbonates; polyolefins such as polyethylene, polypropylene, or the like; polyvinyl chloride; polytetrafluoroethylene; polyimide; polyether imide; polyaramide; polyether ketone; polyether-ether ketone; polyphenylene sulfide; poly (4-methylpentene-1); ethylene copolymers such as ethylene-propylene copolymers, ethylenevinyl acetate copolymers, ionomers, or the like; thermoplastic polyolefins; and thermoplastic elastomers such as thermoplastic polyester elastomers or the like. Such plastic films may be also used as a mixture of one or more types of materials. The plastic film may be nonoriented, uniaxially oriented, or biaxially oriented. Among these substrates, from the standpoints of transparency, impact resistance, economics, and ease of handling, preferred synthetic resins as substrates are polyolefins, polyethylene terephthalate, and polycarbonates. From the standpoints of economics and general versatility, the most preferred films are polyolefins such as polyethylene, polypropylene, or the like. Thickness of such films is generally in the range of 5 to 100 μm, and such films may be suitably used when the thickness is 20 to 60 μm.

In order to improve bonding of the releasable adhesive layer, the aforementioned sheet-form substrate as used may be subjected to primer treatment, corona treatment, etching treatment, plasma treatment, or sandblasting treatment. Corona treatment and primer treatment are preferred. More preferably, primer treatment is performed upon a corona-treated substrate.

Primer compositions that may be used are exemplified by: condensation type silicone primers compositions including a condensation reaction catalyst and polydiorganosiloxanes having terminal SiOH groups, polysiloxanes having the SiH group, and/or polysiloxanes having an alkoxy group; and addition type silicone primer compositions including polydiorganopolysiloxanes having an alkenyl group (e.g. vinyl group or the like), polysiloxanes having the SiH group, and an addition reaction catalyst.

The sheet-form substrate of the present invention may be provided with one or more functional layers on a surface other than the surface provided with the aforementioned releasable adhesive layer. The sheet-form substrate of the present invention may be a releasable adhesive sheet that imparts one or more functions to the substrate itself. The function may be imparted jointly to the substrate itself and to a laminate of a functional layer that is the same or different from the aforementioned releasable adhesive layer. The releasable adhesive sheet imparted with this functionality is quite useful as a protective film or functional fixing sheet.

The term "function" includes ultraviolet radiation blocking ability, infrared blocking ability, electromagnetic wave

blocking ability, antistatic properties, electrical conductivity, deodorizing ability, odor removal ability, antibacterial ability, printability, ink reception ability, hydrophilicity, anti-condensation ability, water repellency, scratch resistance, thermal conductivity, or the like. The function may be imparted by including the functionalization agent in the sheet-form substrate, or the same layer as the aforementioned releasable adhesive layer or in a different functional layer (including a laminate).

Among the aforementioned various functions, ultraviolet radiation blocking ability is imparted by blending an inorganic or organic photostabilizer or UV absorber in the sheet-form substrate or the like, and preferably in a transparent sheet-form substrate. Such photostabilizers or UV absorbers are exemplified by the same additives as the aforementioned additives.

The obtained releasable adhesive sheet can be used to prevent ultraviolet radiation damage (such as sunburn or the like) by absorbing ultraviolet radiation by attaching, for example, to the window glass of a house, building, or vehicle. Moreover, it is possible to suppress deterioration of displayed objects by attaching to the glass part of a display case of an art gallery or museum, or to prevent discoloration by attaching to the surface of a poster, advertisement, certificate, or the like. Moreover, by attaching to the surface of various types of photographs and color copies, it is possible to prevent discoloration, and it is possible to prevent deterioration by attaching to the transparent part of a storage case for foodstuffs or clothing.

Infrared blocking ability is imparted by blending an inorganic or organic infrared radiation absorption agent in either a functional layer or the sheet-form substrate (preferably a transparent sheet-form substrate) or the like. Moreover, infrared reflectivity may be imparted by forming a thin layer of a metal oxide on the surface of the substrate.

By attaching the obtained releasable adhesive sheet to the widow glass of a home, building, or vehicle, rise of temperature within the room or vehicle is suppressed, and air conditioning efficiency is improved. When the obtained releasable adhesive sheet is attached to the window glass of a freezer or refrigerating showcase, the efficiency of air conditioning is improved. Moreover, when the obtained releasable adhesive sheet is attached to the screen surface of a plasma display, the infrared radiation emitted from the plasma display is blocked, and it is possible to prevent erroneous operation of the remote control function. Moreover the obtained releasable adhesive sheet is used as an optical filter by attaching to the surface of a glass or transparent plastic plate.

Electromagnetic wave blocking ability may be imparted by blending an inorganic or organic electrically conductive agent or a magnetic material in either the sheet-form substrate or a functional layer, or by forming a metal or thin metal oxide film on the substrate.

The obtained releasable adhesive sheet blocks electromagnetic waves generated by equipment by attaching to various types of office automation equipment, household electrical appliances, displays or a frame part of IT equipment or medical treatment equipment, or the like, thereby protecting the human body or preventing erroneous operation of the equipment due to harmful electromagnetic waves. Moreover, harmful electromagnetic waves are blocked and erroneous operation of the aforementioned equipment is prevented by attaching the releasable adhesive sheet to walls and other partitioning parts placed in a space where medical treatment equipment of a hospital, a control system of a transport facility or an industrial plant, or the like is located.

Antistatic properties and electrical conductivity are imparted by blending an antistatic agent in either the sheet-form substrate or the functional layer, and preferably in the sheet-form substrate. By attaching the obtained releasable adhesive sheet to the window glass of a semiconductor factory, it is possible to prevent release of alkali ions from the window glass, and it is possible to prevent adhesion of dust. Also by attaching the sheet-form substrate to the partitioning parts of window glass or walls or the like of a cleanroom, it is possible to control particulate contamination. By attaching the sheet-form substrate to chip trays or the like of a semiconductor, static electric damage to the semiconductor can be prevented.

Deodorizing and odor removal ability is imparted by blending an inorganic or organic deodorizing agent or odor removal agent in either the sheet-form substrate or a functional layer, and preferably in the sheet-form substrate. By attaching the obtained releasable adhesive sheet to the wall or window glass of a home, building, vehicle, or the like, it is possible to anticipate an odor removing effect for tobacco smoke, body waste, or the like. Moreover, when the deodorizing and odor removal effect has declined, the releasable adhesive sheet is advantageous because the sheet can be easily replaced with the sheet having deodorizing function due to excellent releasability.

Antibacterial properties are imparted by blending an inorganic or organic antibacterial agent in either the sheet-form substrate or a functional layer, and preferably in the surface or interior of the sheet-form substrate. Alternatively, antibacterial properties are imparted by laminating an active layer including a photocatalyst, e.g. titanium oxide or the like, on the substrate. The obtained releasable adhesive sheet controls the growth of bacteria by attaching to parts contacted by the hand on equipment or tools in daily use, such as household electrical appliances, office automation equipment, writing tools, or the like; by attaching to windows, walls, or other partitioning parts, or surfaces of cooking implements, kitchen counters, food containers, storage locations, or the like at homes, hospitals, cafeterias, or the like.

Printability and writeability, as typified by ink reception ability, is imparted by improving adhesion of ink or toner by changing properties of the surface of the sheet-form substrate. Moreover, the ability to receive ink of an inkjet or a permanent marker is increased by forming a hydrophilic polymer layer on the surface of the substrate, or by forming a

hydrophilic polymer layer formed by blending fine porous particles on the surface of the substrate. The obtained releasable adhesive sheet, depending on the contents of the printing, writing, or copy material, may be used by attaching to a white board, wall, or display board as a means for communication or as a conference material, or may be used by attaching to a display board or wall of a building as a poster or other advertising medium.

Hydrophilicity and anti-condensation ability are imparted by lamination or blending of a antifog additive or hydrophilic agent in the sheet-form substrate. Moreover, these properties may be imparted by laminating a hydrophilic layer, antifog layer, or photocatalyst active layer on the surface of the substrate. The obtained releasable adhesive sheet is attached to various types of mirror surfaces and is used to prevent fogging. Moreover, the obtained releasable adhesive sheet is attached to the window or wall surface of a home, building, vehicle, or the like for self-cleaning or for prevention of condensation. Moreover, the obtained releasable adhesive sheet is used for imparting self-cleaning ability by attaching to the surface of an advertising medium such as a sign or the like. The obtained releasable adhesive sheet is also used for prevention of condensation by attaching to the window of a refrigerated showcase.

Water repellency is imparted by forming a water repellant layer formed from a fluorine compound alone, or alternatively, formed from a mixture of a photocatalyst and a fluorine compound, on the surface of the sheet-form substrate. This water repellency is used for the same purposes as the aforementioned hydrophilicity and antifog ability.

Scratch resistance is imparted by forming a hard coating layer formed from an organic substance, an inorganic substance, or a composite of such substances on the surface of the sheet-form substrate. Specifically, surface treatment using an epoxy-based hard coating agent can be used. The obtained releasable adhesive sheet is attached for protection of the surface of an input part membrane switch, liquid crystal display, anti-glare filter, touch panel, or the like of household electrical appliances, office automation equipment, IT equipment, or the like. Moreover, the obtained releasable adhesive sheet is used by attaching to a nameplate, display board, wall, decorative sheet, or the like as protection of the surface.

Thermal conductivity may be imparted by blending a thermally conductive filler in the sheet-form substrate or the functional layer. The thermally conductive filler is exemplified by aluminum oxide, boron nitride, aluminum nitride, zinc oxide, aluminum oxide, silicon carbide, quartz, aluminum hydroxide, or the like. The obtained releasable adhesive sheet is useful as a heat dissipating fixing sheet for preventing degradation of characteristics due to heat generated by a heat generating electronic part such as a power transistor, thyristor, or the like used in various types of electronic devices, or by an integrated circuit element such as an IC, LSI, CPU, MPU, or the like.

In addition to imparting the aforementioned functionality, the surface of the sheet-form substrate may be subjected to antifog treatment by use of an antifog treatment agent such as fluorine type, silicone type, ceramic type, photocatalyst type, or similar antifog agents.

In the same manner, the surface of the sheet-form substrate may be subjected to anti-reflection treatment by wet processing (by coating of an anti-reflective agent such as a fluorine type, silicone type, or similar agent), or by dry processing (by vapor deposition or sputtering).

The sheet-form substrate that has the releasable adhesive layer of the present invention is quite useful particularly as a protective film for a display. This protective film may be used for a television receiver, computer monitor, portable information terminal monitor, observation monitor, video camera, digital camera, cellular phone, portable information terminal, displays used for meter panels of an automobile or the like, displays used for meter panels of various types of equipment, devices, and instruments, automatic ticket sales machines, ATMs, or the like, and various types of flat panel displays (FPD) for the display of text, symbols, or images. Devices are exemplified by display devices such as CRT displays, liquid crystal displays, plasma displays, organic EL displays, inorganic EL displays, LED displays, surface-conduction electron-emitter displays (SED), field emission displays (FED), or the like, and use is possible for touch panels using such display devices. The film of the present invention is used with the purpose of preventing damage to the surface of the display, preventing contamination, preventing attachment of fingerprints, preventing static electricity, preventing reflection, and preventing people from peeping at the display.

The sheet-form substrate that has the releasable adhesive layer of the present invention that has an ultra-low peeling force to a low peeling force (i.e. peeling force of about 1 to 20 g/inch) can be used particularly suitably as a protective film for a display. The sheet-form substrate that has the releasable adhesive layer of the present invention and that is a protective film having an ultra-low peeling force (i.e. peeling force of 1 to 3 g/inch) is suitably used as a protective film for a large sized display of a computer monitor or the like. A protective film that has weak peeling force (i.e. peeling force of 3 to 8 g/inch) is suitably used as the protective film of the display of a portable information terminal as typified by a cellular phone. Furthermore, the sheet-form substrate having the releasable adhesive layer of the present invention does not entrap air bubbles during attachment, and has the excellent attachment characteristics of being able to readily remove air bubbles; and the sheet-form substrate having the releasable adhesive layer of the present invention may be attached to the surface in a short time interval. In spite of its a low peeling force, the sheet-form substrate having the releasable adhesive layer of the present invention is quite useful from the standpoint that there is no peeling from the display surface and no slipping from position. Furthermore, due to the ability to maintain visibility through the protective film, the sheet-form substrate is most preferably substantially transparent.

In the same manner, by providing the sheet-form substrate that has the releasable adhesive layer of the present

invention with a printable or writable surface on at least one surface of the sheet-form substrate, it is possible to print on one surface of this sheet, and easily produce a window display or indoor display by attaching the releasable adhesive layer to a flat-surfaced attachment target such as a window glass, metal, ceramic, plastic, or the like. This releasable fixing sheet may be used for a window display, interior display, interior decoration, label, sticker, advertisement, sign, or the like. Furthermore, by realizing an ornamental effect by color, pattern, or the like of the surface side of the sheet-form substrate, the releasable fixing sheet may be used as a fixing sheet for ornamentation as a replacement for painting.

A sheet-form substrate having the releasable adhesive layer of the present invention and having an ultra-low peeling force to a relatively high peeling force (i.e. a peeling force of about 1 to 200 g/inch) may be used with particular advantage as a releasable fixing sheet. Depending on frequency of replacing signs and window displays and the place where the sheet is used, although the preferred peeling force will vary, when the releasable fixing sheet is used for a window display that is replaced each season, the peeling force is preferably 10 to 200 g/inch, and a peeling force of 20 to 150 g/inch is particularly preferred.

Furthermore, the releasable adhesive layer of the present invention has excellent attachment characteristics in that the peeling force does not change greatly even when used at high temperature, the entrapment of air bubbles does not easily occur when attaching (and if air bubbles are entrapped, the air bubbles may be removed quickly), quick attachment to a surface is possible, and strong fixation to the attached position is possible. Moreover, the releasable adhesive layer of the present invention results in substantially no transfer of silicone or remnant adhesive after peeling off. Therefore, there are advantages in that the releasable fixing sheet used as a decoration or advertisement has excellent appearance and is readily reattached, adjusted, and replaced after use.

When the releasable adhesive layer is formed on only one surface of the substrate, the sheet-form substrate that has the releasable adhesive layer of the present invention can be in the form where a release agent layer is normally formed by coating a release agent on the opposite side of the substrate and drying, and laminating layers sequentially so that the adhesive agent layer and the release agent layer are in contact, or it is possible to make a product in a roll form where the adhesive agent layer is placed inwardly. Furthermore, it is possible to make a product in a form where a release agent layer formed on one surface of the release member is attached to a releasable adhesive layer formed from a substrate and an adhesive agent layer. Furthermore, when releasable adhesive layers are formed on both faces of the substrate, it is possible to make a product in a form where release agent layers of two sheets of release members having release agent layers formed on one surface each are respectively attached to the adhesive agent layers formed on both faces of the releasable adhesive sheet.

The release agent used for forming the release agent layer is exemplified by silicone type release agents, fluorine resin type release agents, wax type release agents, polyvinyl alcohol urethane type release agents formed by addition of long chain alkyl isocyanates to polyvinyl alcohols, urethane type release agents formed by addition of long chain alkyl isocyanates to polyethylene-vinyl alcohol copolymers, polyalkylene imine urea type release agents formed by addition of long chain alkyl isocyanates to polyalkylene imines, or the like.

Moreover, the sheet-form substrate having the releasable cured film of the present invention, even at high temperature, can almost entirely suppress transfer of the silicone component to the attachment target and the generation of remnant adhesive during peeling off the releasable adhesive layer. Therefore, use is possible for applications such as temporary tape used for the manufacture of automobiles or semiconductors, heat resistant tape, electrically insulating tape, heat seal tape, plating masking tape, heat treatment masking tape, or the like.

## Examples

Hereinafter, the present invention is described in detail with reference to Practical Examples and Comparative Examples, but it should be understood that the present invention is not limited to these Practical Examples. In the below listed examples, "parts" always means "weight parts," and viscosity is the value measured at 25°C. In the formulae, M is a monofunctional siloxane unit expressed by $(CH_3)_3SiO_{1/2}$ or $(CH_3)_2(OH)SiO_{1/2}$, $M^{Vi}$ is a monofunctional siloxane unit expressed by $(CH_3)_2(CH_2{=}CH)SiO_{1/2}$, $M^{OH}$ is a monofunctional siloxane unit expressed by $(CH_3)_2(OH)SiO_{1/2}$, D is a bifunctional siloxane unit expressed by $(CH_3)_2SiO_{2/2}$, and Q is a tetrafunctional siloxane unit expressed by $SiO_2$.

Viscosity and silanol group content of the organopolysiloxane resin-organopolysiloxane condensation reaction product of the present invention or the like were measured by the below indicated methods. Moreover, peeling force of the releasable adhesive layer formed by curing the silicone-based releasable adhesive composition, remnant adhesive after peeling off, and attachment characteristics (rate of spreading and presence or absence of entrapped air bubbles) were evaluated by the methods indicated below.

[Viscosity]

Viscosity was measured at 25°C using a digital-indicator type viscometer (manufactured by Shibaura System Co., Ltd., model Vismetron VDA2) using the No. 2 rotor and a rotor rotation speed of 30 rpm.

[Hydroxyl Group (Silanol Group) Content]

The content of the hydroxyl group in the organopolysiloxane resin and each condensation reaction product were measured using an FT-IR (Fourier transform infrared spectrometer) model NEXUS 670 (manufactured by Thermo Fisher Scientific Inc.) based on measurement of the intensity of absorption of the characteristic absorption peak of -OH stretching-shrinking vibration at a wavelength of 3200 to 3800 $cm^{-1}$ attributed to the hydroxyl group (silanol group). Specifically, the content of the hydroxyl group in the sample was measured quantitatively from the absorption intensity of the aforementioned peak of the measurement sample by utilizing a calibration curve using a trimethylsilanol standard sample that had a previously known content of the hydroxyl group.

[Method of Curing the Silicone-based Releasable Adhesive Composition: Formation of the Releasable Adhesive Layer]

Silicone-based releasable adhesive compositions were prepared of the compositions indicated in Table 1. Each composition was coated onto a 50 μm thick corona-treated polyethylene terephthalate film (manufactured by NANYA Plastics Corp.) using a Mayer bar so that the cured releasable adhesive layers had the thicknesses indicated in each table (Tables 2 through 7, Table 9), and samples were prepared. Each sample was heated for 60 seconds in a heated air type dryer set at 130°C or 150°C. This sample was used as a silicone-based releasable adhesive sheet and was used for the below listed measurements.

[Peeling Force: Peeling Force Measured by 180-degree Peel Test]

Based on the Finat method (a European standard) FTM No. 10, the tensile force required for peeling off the releasable adhesive sheet was measured using an adhesion release tester (Chem Instruments Model AR1500, manufactured by Chem Instruments Inc. (US)) and a pull speed of 0.3 m/minute by peeling at 180°.

(1) Peeling Force Relative to Acrylic Type Adhesive Tape

After 24 hours of post-curing, the surface of the obtained silicone-based releasable adhesive sheet was attached to an acrylic type adhesive tape (product name = TESA 7425 tape, Tesa AG (Germany)), a 20 $g/cm^2$ load was applied, and immediately after attachment and also after 24 hours of heat treatment at 70°C, the adhesion release tester was used to measure the force required for peeling off the silicone-based releasable adhesive sheet from the laminated TESA 7425 tape.

(2) Peeling Force Relative to Polyethylene Terephthalate Film

The force required for peeling off of the silicone-based releasable adhesive sheet from a polyethylene terephthalate film was measured by application of the same load and using an adhesion release tester in the same manner as in the aforementioned (1) except for attachment to a 50 μm thick corona-treated polyethylene terephthalate film (manufactured by NANYA Plastics Corp.) rather than the TESA 7425 tape.

(3) Peeling Force Relative to Mirror Surfaced Steel Plate

The force required for peeling off of the silicone-based releasable adhesive sheet from a mirror surfaced steel plate was measured by application of the same load and using an adhesion release tester in the same manner as during the aforementioned (1) except for attachment to a 2 mm thick standard steel plate that has been mirror surfaced, rather than to the TESA 7425 tape.

(4) Peeling Force Relative to Glass Plate

The force required for peeling off of the silicone-based releasable adhesive sheet from a glass plate was measured by application of the same load and using an adhesion release tester in the same manner as during the aforementioned (1) except for attachment to a 2 mm thick glass plate, rather than to the TESA 7425 tape.

[Peeling Force: Ball Tack Value]

The produced releasable adhesive sheet was set on a sloped surface angled at 30° relative to horizontal direction, and standard stainless steel balls were rolled down three times from above. The ball tack value was taken to be the number of the largest ball that rolled for not longer than 10 cm distance on the adhesive sheet during at least 2

trials out of 3 trials.

[Releasability Characteristic: Evaluation of Residual Adhesion Ratio]

The residual adhesion ratio of the releasable adhesive sheet was measured according to the method listed below, based on the Finat method (European standard) FTM No. 11. After 24 hours of post-curing of the obtained silicone-based releasable adhesive sheet, the silicone-based releasable adhesive sheet was attached to a 2 mm thick mirror-surfaced standard steel plate, and a 20 g/cm$^2$ load was applied. An adhesion release tester was then used to determine the force (A) required for peeling off the silicone-based releasable adhesive sheet immediately after attachment to the standard steel plate, and the adhesion release tester was also used to determine the force (B) required for peeling off the silicone-based releasable adhesive sheet after 24 hours of heat treatment at 70°C. The residual adhesion ratio (%) was found from the following formula.

$$\text{residual adhesion ratio} = \text{adhesion force (A)} \,/\, \text{blank adhesion force (B)} \times 100$$

[Attachment Test]

Multiple releasable adhesive sheets were prepared, and a 1 inch wide releasable adhesive sheet was attached thoroughly to a clean glass plate by applying loads using 2 kg weight roller more than twice. Thereafter, each releasable adhesive sheet was carefully peeled from the glass plate, and was reattached from the 180° angle. This attachment test was performed simultaneously for multiple releasable adhesive sheets, the entire surfaces of the releasable adhesive sheets were spread out upon the glass surface, and relative evaluation was performed of the speed until air bubbles entrapped during the attachment step were entirely eliminated. The attachment test was performed for each sample 3 times, and the speed of attachment and elimination of air bubbles (gas escape characteristic) were recorded as relative values among the samples, i.e. rank 1, rank 2, rank 3, etc.

[Synthesis Example 1: 50 weight% Dimethylpolysiloxane Solution of (A1) Methylpolysiloxane Resin-Dimethylpolysiloxane Condensation Product]

The raw materials listed below were charged into a 2 L separable flask equipped with a thermometer, cooling tube, and stirrer, and the mixture was stirred for 30 minutes.

(a1-1) Methylpolysiloxane resin:

$M_{074}Q_1$ (OH content =0.74 weight%) 300 g
(a2-1) Straight-chain dimethylpolysiloxane capped at both molecular terminals with hydroxy dimethylsiloxy groups:

| | |
|---|---|
| $M^{OH}D_{330}M^{OH}$ | 128g |
| xylene | 444 g |

After the aforementioned raw materials were uniformly mixed, the mixture was heated to 40°C, 5 g of (a3) 28% ammonia aqueous solution was added, and the reaction was performed for about 5 hours. Thereafter, a water trap tube was attached, and the mixture was heated to 140°C. Condensation water and ammonia were removed over 2 hours, and the mixture was cooled to room temperature to obtain a xylene solution of methylpolysiloxane resin-dimethylpolysiloxane condensation product (hydroxyl group content = 0.46 weight%).

For adjustment of viscosity, 428 g of a straight-chain dimethylpolysiloxane ($M^{V1}D_{60}M^{V1}$) capped at both molecular terminals with dimethylvinyl siloxy groups was added to the obtained xylene solution of the (A1) methylpolysiloxane resin-dimethylpolysiloxane condensation product. The mixture was blended for about 30 minutes until uniform, and the xylene was removed by stripping to obtain the dimethylpolysiloxane solution of the component (A1). The viscosity of this solution was 6,000 mPa·s. The content of the methylpolysiloxane resin-dimethylpolysiloxane condensation product in this solution was 50 weight%.

[Synthesis Example 2: 25 weight% Dimethylpolysiloxane Solution of (A1) Methylpolysiloxane Resin-Dimethylpolysiloxane Condensation Product]

The dimethylpolysiloxane solution of the component (A1) was obtained in the same manner as during the Synthesis Example 1, except for the addition, for adjustment of viscosity, of 1,284 g of straight-chain dimethylpolysiloxane ($M^{V1}D_{60}M^{V1}$) capped at both molecular terminals with dimethylvinyl siloxy groups. The viscosity of this solution was 2,000 mPa·s. The content of the methylpolysiloxane resin-dimethylpolysiloxane condensation product in this solution was 25 weight%.

[Synthesis Example 3: 50 weight% Dimethylpolysiloxane Solution of (A2) Methylpolysiloxane Resin-Dimethylpolysiloxane Condensation Product Having Hydroxyl Groups Partially Capped by Trimethylsilyl Groups]

After obtaining a xylene solution of the (A1) methylpolysiloxane resin-dimethylpolysiloxane condensation product in the same manner as in the aforementioned Synthesis Example 1, 4 g of (a4) hexamethyldisilazane was added at room temperature, and the mixture was reacted for 2 hours at 85°C to cap a part of the silanol groups of the component (A1) by trimethylsilyl groups. The obtained solution after the reaction was a xylene solution of (A2) methylpolysiloxane resin-dimethylpolysiloxane condensation product having hydroxyl groups partially capped by trimethylsilyl groups (hydroxyl group content: 0.35 weight%). For adjustment of viscosity, 428 g of straight-chain dimethylpolysiloxane ($M^{Vi}D_{60}M^{Vi}$) capped at both molecular terminals with dimethylvinyl siloxy groups was added to the xylene solution of (A2) methylpolysiloxane resin-dimethylpolysiloxane condensation product having hydroxyl groups partially capped by trimethylsilyl groups. The mixture was blended for about 30 minutes until uniform, and the xylene was removed by stripping to obtain the dimethylpolysiloxane solution of the component (A2). The viscosity of a 50 weight% of dimethylpolysiloxane solution of component (A2) was 5,900 mPa·s.

Practical Examples 1 to 8 and Comparative Examples 1 and 2

Silicone-based releasable adhesive compositions were prepared of the compositions shown in Table 1. The peeling forces measured are shown below in Tables 2 through 6. Releasable adhesive layers of the silicone-based releasable adhesive compositions having different thicknesses are cured under respective conditions, i.e. 130°C for 60 seconds for Practical Examples 1 through 3 and Comparative Example 1, and 150°C for 60 seconds for Practical Examples 5 through 8 and Comparative Example 2. Table 7 shows the results of evaluation of characteristics of the releasable adhesive layers of the Practical Examples 4 through 7 and Comparative Example 2. Solvent type compositions were formed by dilution using ethyl acetate to produce a solid content of 80 weight% only for those samples used for producing 80 to 92 μm thick releasable adhesive layers. For other coating conditions, solvent type compositions were produced by dilution using heptane so as to obtain a solid content of 40 weight%.

Table 1: Silicone-based releasable adhesive compositions

| Table 1 | | | | | | | | | |
|---|---|---|---|---|---|---|---|---|---|
| | Practical Examples | | | | | | | Comparative Examples | |
| Practical Examples/ Comparative Examples No. | 1 | 2 | 3 | 4 | 5 | 6 | 7 | 1 | 2 |
| (A1) condensation product solution *1 | 10 | 20 | 40 | 40 | 60 | 80 | 90 | 0 | 100 |
| (B1)$M^{V1}D_{60}M^{V1}$ | | | | | | | | 25 | |
| (B2) $M^{V1}D_{312}M^{V1}$ | 90 | 80 | 60 | | | | | 75 | |
| (B3) $M^{V1}D_{527}M^{V1}$ | | | | 60 | 40 | 20 | 10 | | |
| (E) 1-ethynyl-l-cyclohexanol | 0.2 | 0.2 | 0.2 | 0.2 | 0.2 | 0.2 | 0.2 | 0.2 | 0.2 |
| (C) methylhydrogenpolysiloxane *2 | 1.65 | 1.85 | 2.2 | 1.9 | 2.3 | 2.8 | 3 | 2.75 | 2.75 |

(continued)

| Table 1 | | | | | | | | | |
|---|---|---|---|---|---|---|---|---|---|
| | Practical Examples | | | | | | | Comparative Examples | |
| (G) 3-glycidoxypropyl trimethoxysilane | 2 | 2 | 2 | 2 | 2 | 2 | 2 | 2 | 2 |
| (D) platinum complex *3 | 2 | 2 | 2 | 2 | 2 | 2 | 2 | 2 | 2 |
| (F) Organic solvent | • When the thickness of the releasable adhesive layer was 80 to 92 μm, (F1) ethyl acetate was used for dilution (solid content: 80 weight%). • For other coating conditions, (F2) heptane was used for | | | | | | | | |
| | | | | | | | | | dilution (solid content: 40 weight%). |
| *1: 50% dimethylpolysiloxane solution of (A1) methylpolysiloxane resin-dimethylpolysiloxane condensation product *2: Methylhydrogenpolysiloxane capped at both molecular terminals with trimethylsiloxy groups (viscosity: 25 mPa·s; silicon-bonded hydrogen atom content: 1.6 weight%) *3: Complex of chloroplatinic acid and 1,3-divinyl-1,1,3,3-tetramethyldisiloxane (platinum metal content: 0.60 weight%) | | | | | | | | | |

Table 2: peeling force relative to acrylic type adhesive tape (initial / after aging at 70°C)

| Table 2 | | | | | |
|---|---|---|---|---|---|
| Thickness of releasable adhesive layer (μm) | 0.5-0.8 | 1.2-1.6 | 19-20 | 40-45 | 80-92 |
| | Initial peeling force (g/inch) | | | | |
| Practical Example 1 | 30.15 | 30.35 | 17.5 | 10.6 | 11.75 |
| Practical Example 2 | 54.3 | 48.1 | 21.95 | 15.2 | 14.65 |
| Practical Example 3 | 114.7 | 97 | 32 | 25.1 | 20.85 |
| Comparative Example 1 | 13.25 | 8.8 | 7.1 | 3.35 | 4.15 |
| | Peeling force (g/inch) after 1 day aging at 70°C | | | | |
| Practical Example 1 | 75.55 | 44 | 22.2 | 16.25 | 11.75 |
| Practical Example 2 | 77.35 | 64.25 | 27.5 | 21.1 | 14.35 |
| Practical Example 3 | 155.5 | 92.8 | 39.5 | 31.5 | 21.9 |
| Comparative Example 1 | 33.6 | 18.15 | 13.6 | 9.65 | 7.45 |

Table 3: Peeling force relative to acrylic type adhesive tape (initial / after aging at 70°C)

| Table 3 | | | | | | |
|---|---|---|---|---|---|---|
| Thickness of releasable adhesive layer (μm) | 0.2-1.0 | 1.7-1.8 | 7-8 | 10-12 | 14-19 | 43-51 |
| | Initial peeling force (g/inch) | | | | | |
| Practical Example 4 | 124 | 76.4 | 49.1 | 45.8 | 42.05 | 40.3 |
| Practical Example 5 | 209 | 105 | 68.55 | 67.85 | 61.05 | 55.1 |
| Practical Example 6 | 253.5 | 126 | 97.9 | 99 | 87.45 | 95.4 |

(continued)

| | Initial peeling force (g/inch) | | | | | |
|---|---|---|---|---|---|---|
| Practical Example 7 | 284 | 137.5 | 110.5 | 114 | 119.5 | 124.5 |
| Comparative Example 2 | 295 | 146 | 134.5 | 153.5 | 171 | 209.5 |
| | Peeling force (g/inch) after 1 day aging at 70°C | | | | | |
| Practical Example 4 | 137.5 | 95.1 | 62.65 | 57.2 | 55.95 | 48 |
| Practical Example 5 | 229 | 120 | 76.9 | 70.3 | 72.4 | 63.35 |
| Practical Example 6 | 283.5 | 146 | 91.5 | 95.75 | 94.25 | 90.15 |
| Practical Example 7 | 299.5 | 150.5 | 109 | 114 | 129.5 | 107.5 |
| Comparative Example 2 | 337 | 161 | 129 | 155 | 193.5 | 162.5 |

Table 4: Peeling force relative to polyethylene terephthalate film (initial / after aging at 70°C)

| Table 4 | | | |
|---|---|---|---|
| Thickness of releasable adhesive layer (μm) | 19-20 | 40-45 | 80-92 |
| | Initial peeling force (g/inch) | | |
| Practical Example 1 | 2.75 | 2.9 | 2.7 |
| Practical Example 2 | 2.9 | 3.1 | 3.05 |
| Practical Example 3 | 3.15 | 3.65 | 3.55 |
| Comparative Example 1 | 2.4 | 2.7 | 2.75 |
| | Peeling force (g/inch) after 1 day aging at 70°C | | |
| Practical Example 1 | 3.35 | 4 | 3.75 |
| Practical Example 2 | 3.95 | 4.5 | 4.3 |
| Practical Example 3 | 5.25 | 5.65 | 5.7 |
| Comparative Example 1 | 3.3 | 3.75 | 4 |

Table 5: Peeling force relative to polyethylene terephthalate film (initial / after aging at 70°C)

| Table 5 | | | | |
|---|---|---|---|---|
| Thickness of releasable adhesive layer (μm) | 10-12 | 14-19 | 18-22 | 43-51 |
| | Initial peeling force (g/inch) | | | |
| Practical Example 4 | 3.9 | 3.8 | 3.95 | 4.3 |
| Practical Example 5 | 4.85 | 4.8 | 5.2 | 5.3 |
| Practical Example 6 | 6.4 | 6.8 | 7.1 | 7.85 |
| Practical Example 7 | 7.6 | 8 | 9.4 | 10.8 |
| Comparative Example 2 | 9.85 | 10.45 | 12.35 | 13.6 |
| | Peeling force (g/inch) after 1 day aging at 70°C | | | |
| Practical Example 4 | 6 | 6.2 | 7.85 | 8.8 |

(continued)

| | Peeling force (g/inch) after 1 day aging at 70°C | | | |
|---|---|---|---|---|
| Practical Example 5 | 7.05 | 7.85 | 9.65 | 10.35 |
| Practical Example 6 | 8.75 | 10.6 | 12.2 | 13.05 |
| Practical Example 7 | 9.9 | 12.1 | 14.3 | 15.75 |
| Comparative Example 2 | 13.4 | 15.4 | 19.8 | 18.3 |

Table 6: Peeling force relative to polyethylene terephthalate film (initial / after aging at 70°C)

| Table 6 | | | | |
|---|---|---|---|---|
| Thickness of releasable adhesive layer (μm) | 10-12 | 14-19 | 18-22 | 43-51 |
| | Initial peeling force (g/inch) | | | |
| Practical Example 4 | 3.9 | 3.8 | 3.95 | 4.3 |
| Practical Example 5 | 4.85 | 4.8 | 5.2 | 5.3 |
| Practical Example 6 | 6.4 | 6.8 | 7.1 | 7.85 |
| Practical Example 7 | 7.6 | 8 | 9.4 | 10.8 |
| Comparative Example 2 | 9.85 | 10.45 | 12.35 | 13.6 |
| | Peeling force (g/inch) after 1 day aging at 70°C | | | |
| Practical Example 4 | 6 | 6.2 | 7.85 | 8.8 |
| Practical Example 5 | 7.05 | 7.85 | 9.65 | 10.35 |
| Practical Example 6 | 8.75 | 10.6 | 12.2 | 13.05 |
| Practical Example 7 | 9.9 | 12.1 | 14.3 | 15.75 |
| Comparative Example 2 | 13.4 | 15.4 | 19.8 | 18.3 |

Table 7: Evaluation of characteristics of the releasable adhesive layers of Practical Examples 4 to 7 and Comparative Example 2

| Table 7 | | | | | | |
|---|---|---|---|---|---|---|
| | Thickness of releasable adhesive layer (μm) | Initial peeling force (g/inch) PET film | Residual adhesion ratio | Initial peeling force (g/inch) Steel plate | Ball tack value (No.) | Attachment characteristic (ranking) |
| Practical Example 4 | 10-12 | 3.9 | 97.70 % | 4.1 | 1 | 1 |
| Practical Example 5 | | 4.85 | 96.80 % | 5 | 2 | 2 |
| Practical Example 6 | | 6.4 | 97.90 % | 7 | 2 | 3 |
| Practical Example 7 | | 7.6 | 94.70 % | 7.6 | 2 | 4 |
| Comparative Example 2 | | 9.85 | 95.10 % | 10 | 3 | 5 |

Practical Examples 8 to 11

Using the compositions shown in Table 8, silicone-based releasable adhesive compositions were prepared that included the branched olefin (referred to hereinafter as the C18 α-olefin) expressed by the below listed structural formula. These silicone-based releasable adhesive compositions were each cured as releasable adhesive layers of different thicknesses for 60 seconds at 150°C. The measured peeling force, residual adhesion ratio, ball tack, and presence-absence of coloration are indicated below in Table 9.

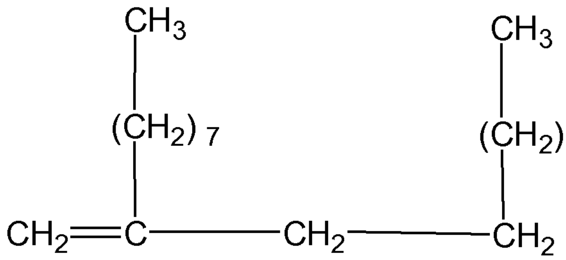

Table 8: Silicone-based releasable adhesive compositions

| Table 8 | | | | |
|---|---|---|---|---|
| Practical Example No. | 8 | 9 | 10 | 11 |
| (A2) condensation product solution *1 | 60 | | | |
| (B4) $M^{V}1D_{165}M^{V1}$ | 40 | | | |
| C18 α-olefin | 0 | 4 | 8 | 12 |
| (E) 1-ethynyl-1-cyclohexanol | 0.27 | | | |
| (C) methylhydrogenpolysiloxane *2 | 4.33 | | | |
| (G) 3-glycidoxypropyltrimethoxysilane | 1 | | | |
| (D) platinum complex *3 | 2 | | | |
| *1: 25 weight% dimethylpolysiloxane solution of the (A1)methylpolysiloxane resin-dimethylpolysiloxane condensation product<br>*2: Methylhydrogenpolysiloxane capped at both molecular terminals with trimethylsiloxy groups (viscosity: 25 mPa·s; silicon-bonded hydrogen atom content: 1.6 weight%)<br>*3: Complex of chloroplatinic acid and 1,3-divinyl-1,1,3,3-tetramethyldisiloxane (platinum metal content: 0.60 weight%) | | | | |

Table 9: Evaluation of characteristics of the releasable adhesive layers of Practical Examples 8 to 11

| Table 9 | | | | | | |
|---|---|---|---|---|---|---|
| | Thickness of releasable adhesive layer (μm) | Initial peeling force (g/inch) PET film | Peeling force after 1 day aging at 70°C (g/inch) PET film | Residual adhesion ratio | Ball tack value (No.) | Coloration after aging |
| Practical Example 8 | 20 | 2.45 | 3.6 | 99.0% | 1 | none |
| Practical Example 9 | | 2.9 | 3.85 | 98.9% | 1 | none |
| Practical Example 10 | | 3.0 | 4.35 | 92.2% | 1 | none |
| Practical Example 11 | | 3.15 | 5.9 | 89.0% | 1 | brown colored remnant adhesive |

**Claims**

1. A silicone-based releasable adhesive composition comprising an organopolysiloxane resin-organopolysiloxane condensation reaction product (A) obtained by a condensation reaction of
(a1) 100 weight parts of organopolysiloxane resin essentially comprising an $R^1{}_3SiO_{1/2}$ unit (each $R^1$ in the formula is independently a hydroxyl group, $C_{1-6}$ alkoxy group, or $C_{1-10}$ substituted or unsubstituted monovalent hydrocarbyl group) and an $SiO_{4/2}$ unit, wherein the molar ratio of the $R^1{}_3SiO_{1/2}$ unit to the $SiO_{4/2}$ unit is 0.6 to 1.0 and the content of the hydroxyl group or alkoxy group is 0.3 to 2.0 weight% with
(a2) 20 to 150 weight parts of straight-chain or branched-chain diorganopolysiloxane that has an average degree of polymerization of 100 to 1000 and that has at least one hydroxyl group or $C_{1-6}$ alkoxy group in each molecule in the presence of
(a3) a condensation reaction catalyst.

2. The silicone-based releasable adhesive composition according to claim 1 comprising:

(A) 100 weight parts of said organopolysiloxane resin-organopolysiloxane condensation reaction product,
(B) 10 to 900 weight parts of organopolysiloxane that contains at least two silicon-bonded alkenyl groups in each molecule,
(C) organohydrogenpolysiloxane that has at least two silicon-bonded hydrogen atoms in each molecule, in an amount that provides a value of 0.3 to 5.0 for the molar ratio between the [silicon-bonded hydrogen in component (C)] and the [alkenyl group in component (B)], and
(D) a catalytic quantity of a platinum hydrosilylation reaction catalyst.

3. The silicone-based releasable adhesive composition according to claim 1 or 2, wherein the hydroxyl group content of the organopolysiloxane resin-organopolysiloxane condensation reaction product (A) is 0.05 to 0.80 weight%.

4. The silicone-based releasable adhesive composition according to any one of claims 1 to 3, wherein the organopolysiloxane resin-organopolysiloxane condensation reaction product (A) is obtained by the condensation reaction of 100 weight parts of component (a1) and 30 to 100 weight parts of component (a2) in the presence of component (a3), and has a hydroxyl group content of 0.10 to 0.60 weight%.

5. The silicone-based releasable adhesive composition according to any one of claims 1 to 3, wherein the organopolysiloxane resin-organopolysiloxane condensation reaction product (A) is obtained by condensation reacting 100 weight parts of component (a1) with 20 to 150 weight parts of component (a2) in the presence of component (a3), and thereafter reacting with 0.1 to 10.0 weight parts of (a4) at least one type of silylating agent.

6. The silicone-based releasable adhesive composition according to any one of claims 1 to 5, further comprising 0.1

to 50 weight parts of at least one type of olefin represented by the following structural formula (1) or (2) to 100 weight parts of the organopolysiloxane resin-organopolysiloxane condensation reaction product (A)

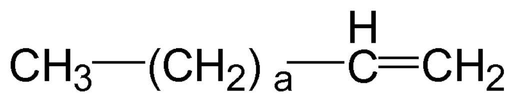

(1)

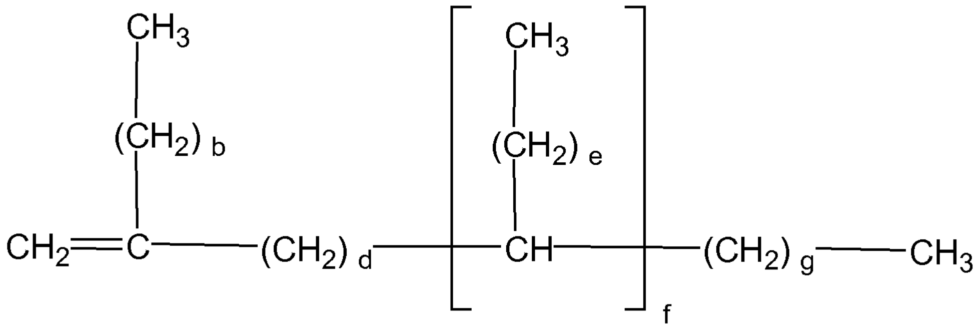

(2)

wherein, a is a number from 1 to 27; d and f are each independently a number from 0 to 20; b and e are each independently a number from 1 to 12; and g is a number from 3 to 14.

**7.** A sheet-form substrate having a releasable adhesive layer obtained by curing the silicone-based releasable adhesive composition according to any one of claims 1 to 6.

**8.** The sheet-form substrate according to claim 7, wherein a thickness of the releasable adhesive layer is in the range of 0.1 to 100 μm.

**9.** The sheet-form substrate according to claim 7 or 8, wherein the releasable adhesive layer has a peeling force in the range of 1 to 20 g/inch, measured according to a 180-degree peel test.

**10.** The sheet-form substrate according to claim 7 or 8, wherein the releasable adhesive layer has a peeling force in the range of 1 to 200 g/inch, measured according to a 180-degree peel test.

**11.** The sheet-form substrate according to any one of claims 7 to 9, wherein the releasable adhesive layer has a thickness of 5 to 100 μm and is obtained by curing the silicone-based releasable adhesive composition comprising:

(A) 100 weight parts of said organopolysiloxane resin-organopolysiloxane condensation reaction product,
(B) 150 to 900 weight parts of said organopolysiloxane that contains at least two silicon-bonded alkenyl groups in each molecule.

**12.** The sheet-form substrate according to claim 7, 8, or 10, wherein the releasable adhesive layer has a thickness of 2 to 60 μm and is obtained by curing the silicone-based releasable adhesive composition comprising:

(A) 100 weight parts of said organopolysiloxane resin-organopolysiloxane condensation reaction product,
(B) 10 to 150 weight parts of said organopolysiloxane that contains at least two silicon-bonded alkenyl groups in each molecule.

**13.** The sheet-form substrate according to any one of claims 7 to 12, further comprising at least one printable or writable surface on the sheet-form substrate.

**14.** The sheet-form substrate according to any one of claims 7 to 13, wherein the sheet-form substrate is substantially transparent.

**15.** A protective film for displays comprising the sheet-form substrate according to any one of claims 7 to 14.

**16.** A protective film for displays comprising the sheet-form substrate according to claim 11, wherein the sheet-form

substrate is substantially transparent.

**17.** A releasable fixing sheet comprising the sheet-form substrate according to any one of claims 7 to 14.

**18.** A releasable fixing sheet for window displays comprising the sheet-form substrate according to claim 12, wherein the sheet-form substrate has at least one printable or writable surface on the substrate.

**INTERNATIONAL SEARCH REPORT**

International application No.
PCT/JP2011/051023

A. CLASSIFICATION OF SUBJECT MATTER
*C09J183/06*(2006.01)i, *C09J4/00*(2006.01)i, *C09J7/02*(2006.01)i, *C09J11/00*(2006.01)i, *C09J183/05*(2006.01)i, *C09J183/07*(2006.01)i

According to International Patent Classification (IPC) or to both national classification and IPC

B. FIELDS SEARCHED

Minimum documentation searched (classification system followed by classification symbols)
C09J183/06, C09J4/00, C09J7/02, C09J11/00, C09J183/05, C09J183/07

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 02-133465 A (Dow Corning Corp.), 22 May 1990 (22.05.1990), claims; page 4, lower right column, lines 1 to 10; page 5, lower right column, line 6 to page 7, lower left column, line 12; page 9, upper left column, line 9 to upper right column, line 7; page 12, upper left column, line 4 to upper right column, line 15; page 14, upper left column, line 4 to lower left column, line 10<br>& US 4882377 A & EP 360516 A2<br>& FI 894463 A & IL 91535 A<br>& DE 68910254 T & ES 2047679 T<br>& CA 1338074 A | 1-5,7-12,14,17<br><br>1-18 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 May, 2011 (17.05.11) | 24 May, 2011 (24.05.11) |
| Name and mailing address of the ISA/<br>Japanese Patent Office<br><br>Facsimile No. | Authorized officer<br><br><br>Telephone No. |

Form PCT/ISA/210 (second sheet) (July 2009)

INTERNATIONAL SEARCH REPORT

International application No.
PCT/JP2011/051023

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y | JP 07-053941 A (General Electric Co.), 28 February 1995 (28.02.1995), claims; paragraphs [0002], [0014] to [0020], [0022] to [0024], [0043] to [0044] & GB 2277933 A & DE 4414653 A1 & FR 2705355 A1 & US 5580915 A | 1,3,4,7-10, 14<br>1-18 |
| Y | JP 2009-155515 A (Dow Corning Toray Co., Ltd.), 16 July 2009 (16.07.2009), claims; paragraphs [0021] to [0027], [0064] to [0065], [0086] & WO 2009/084726 A1 & US 2010/0285312 A1 & KR 2010-096159 A & EP 2225329 A1 & CN 101861359 A | 1-18 |
| Y | JP 2000-080282 A (Dow Corning Corp.), 21 March 2000 (21.03.2000), claims; paragraphs [0075] to [0076] & EP 980903 A2 & US 6124419 A & KR 2000-017286 A | 6 |
| Y | JP 2004-059800 A (Fujicopian Co., Ltd.), 26 February 2004 (26.02.2004), claims; paragraph [0055] (Family: none) | 13,18 |
| A | JP 2004-075918 A (Shin-Etsu Chemical Co., Ltd.), 11 March 2004 (11.03.2004), claims; paragraphs [0012] to [0020] & US 2004/0044132 A1 | 1-18 |
| A | JP 2008-179782 A (Dow Corning Toray Co., Ltd.), 07 August 2008 (07.08.2008), claims; paragraph [0022] & WO 2008/084747 A2 & KR 2009-099078 A & CN 101616995 A | 1-18 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006 A
- JP 152266 A
- JP 2004059800 A
- JP 4292270 B
- JP 2007254565 A
- JP H02269157 A
- JP H10110156 A
- JP 2008156497 A